# EUROPÄISCHE PATENTANMELDUNG

(11) **EP 4 813 191 A2**
(43) Veröffentlichungstag der Anmeldung: **30.09.2026**
(21) Anmeldenummer: 26162414.2
(22) Anmeldetag: 04.03.2026
(51) Int. Cl.: A01D 34/416

(54) **SCHNEIDKOPF**

(30) Priorität: 05.03.2025 DE 102025108429
(71) Anmelder: Andreas Stihl AG & Co. KG, 71336 Waiblingen (DE)
(72) Erfinder: Kaupp, Klaus, 71334 Waiblingen (DE); Schmidt, Sebastian, 74366 Kirchheim am Neckar (DE); Lenz, Ulli, 71384 Weinstadt (DE); Leix, Sven, 73268 Erkenbrechtsweiler (DE); Widmann, Lars, 71549 Auenwald (DE)
(74) Vertreter: Stock, Johannes

(57) **Zusammenfassung**

Die Erfindung betrifft einen Schneidkopf umfassend ein Gehäuse (11), eine Wellenaufnahme (14) mit einem Aufnahmeraum (15) zur Befestigung des Schneidkopfes (10) an einer Abtriebswelle (3) eines Arbeitsgerätes (1), eine Fadenspule (16) zur Aufnahme mindestens eines Schneidfadens (19), eine Stelleinrichtung (20), wobei die Stelleinrichtung (20) zum Nachstellen einer freien Schneidfadenlänge (59) eines Schneidfadens (19) in Abhängigkeit der Fliehkraft ausgebildet ist, wobei der Schneidkopf (10) ein Griffelement (40) und eine Kupplungseinrichtung (30) umfasst, wobei die Kupplungseinrichtung (30) eine Betriebsstellung (38) und eine Wickelstellung (39) umfasst, wobei in der Wickelstellung (39) der Kupplungseinrichtung (30) zum Aufwickeln eines Schneidfadens (19)
- das Griffelement (40) und das Gehäuse (11) bezüglich der Drehachse (4) des Schneidkopfes (10) relativ zueinander drehbar sind und
- das Griffelement (40) und die Fadenspule (16) durch die Kupplungseinrichtung (30) drehfest verbunden sind.

## Beschreibung

Die Erfindung betrifft einen Schneidkopf der im Oberbegriff des Anspruchs 1 angegebenen Gattung.

Aus dem Stand der Technik ist ein Schneidkopf bekannt, der ein Gehäuse und eine Wellenaufnahme zur Befestigung des Schneidkopfes an einer Abtriebswelle eines Arbeitsgerätes, insbesondere eines Freischneiders, umfasst. Der Schneidkopf ist über die Abtriebswelle um eine Drehachse des Schneidkopfes in eine Drehrichtung angetrieben. Ferner umfasst der Schneidkopf eine Fadenspule, die innerhalb des Gehäuses angeordnet ist. Die Fadenspule dient zur Aufnahme eines Schneidfadens. Mit Rotation des Schneidkopfes dreht sich auch der Schneidfaden um die Drehachse. Mit den freien Enden des Schneidfadens, die aus dem Gehäuse des Schneidkopfes ragen, kann der Bediener des Freischneiders Gras, Gestrüpp oder dergleichen schneiden.

Im Betrieb des Schneidkopfes nutzt sich der Schneidfaden ab, wodurch sich die freien Enden des Schneidfadens kürzen. Zum Nachstellen der freien Enden des Schneidfadens umfasst der Schneidkopf eine Stelleinrichtung. Mittels dieser Stelleinrichtung wird die freie Schneidfadenlänge des Schneidfadens in Abhängigkeit der Fliehkraft nachgestellt.

Nachteilig des bekannten Schneidkopfes ist, dass das Bewickeln der Fadenspule nur äußerst unkomfortabel möglich ist. Der Bediener muss die Fadenspule aus dem Gehäuse ausbauen, die Fadenspule bewickeln und anschließend die Fadenspule wieder in das Gehäuse einbauen. Nicht selten wickelt sich der Schneidfaden aufgrund seiner Eigenspannung von der Fadenspule ab. Oftmals sind an der Fadenspule sogar zwei Spulenkammern vorgesehen, auf welche je ein Schneidfadenende aufgewickelt ist. Die Schneidfadenenden an einer solchen Fadenspule zum Aufwickeln der Schneidfäden oder zum Einbau der Fadenspule in das Gehäuse gespannt zu halten, gestaltet sich besonders schwer. Hält der Bediener die Schneidfäden nicht ausreichend fest, kann dies zum Abwickeln der Schneidfäden führen. Oftmals sind für den Bediener mehrere Versuche erforderlich, bis dieser die Fadenspule mit aufgewickelten Schneidfäden an dem Schneidkopf befestigt hat.

Es ist daher Aufgabe der Erfindung, einen Schneidkopf der gattungsgemäßen Art anzugeben, der neben der automatischen Fadennachstellung im Betrieb des Schneidkopfes auch eine komfortable Bewicklung der Fadenspule des Schneidkopfes ermöglicht.

Diese Aufgabe wird durch einen Schneidkopf gemäß den Merkmalen des Anspruchs 1 gelöst.

Der erfindungsgemäße Schneidkopf umfasst ein Gehäuse, eine Wellenaufnahme mit einem Aufnahmeraum zur Befestigung des Schneidkopfes an einer Abtriebswelle eines Arbeitsgerätes, wobei der Schneidkopf über die Abtriebswelle um eine Drehachse des Schneidkopfes in eine Drehrichtung antreibbar ist, eine im Gehäuse angeordnete Fadenspule zur Aufnahme mindestens eines Schneidfadens, eine Stelleinrichtung, wobei die Stelleinrichtung zum Nachstellen einer freien Schneidfadenlänge eines Schneidfadens in Abhängigkeit der Fliehkraft ausgebildet ist. Der Schneidkopf umfasst ein Griffelement und eine Kupplungseinrichtung. Das Griffelement ist für den Bediener in einem montierten Zustand des Schneidkopfes zugänglich. Die Kupplungseinrichtung umfasst eine Betriebsstellung und eine Wickelstellung, wobei in der Betriebsstellung der Kupplungseinrichtung das Griffelement und das Gehäuse durch die Kupplungseinrichtung bezüglich der Drehachse des Schneidkopfes drehfest miteinander verbunden sind. In der Wickelstellung der Kupplungseinrichtung sind zum Aufwickeln eines Schneidfadens das Griffelement und das Gehäuse bezüglich der Drehachse des Schneidkopfes relativ zueinander drehbar. Zudem sind in der Wickelstellung der Kupplungseinrichtung zum Aufwickeln eines Schneidfadens das Griffelement und die Fadenspule durch die Kupplungseinrichtung drehfest verbunden.

Der erfindungsgemäße Schneidkopf umfasst also eine Stelleinrichtung, durch die der freie Schneidfaden automatisch im Betrieb des Schneidkopfes verlängert werden kann. Darüber hinaus umfasst der Schneidkopf eine Kupplungseinrichtung. Diese Kupplungseinrichtung umfasst eine Wickelstellung und eine Betriebsstellung. Befindet sich die Kupplungseinrichtung in der Wickelstellung, kann der Bediener auf komfortable Weise den Schneidfaden auf die Fadenspule aufwickeln, wobei die Fadenspule dabei in dem Gehäuse gehalten ist. Der Schneidfaden ist an der Fadenspule befestigt. In der Wickelstellung der Kupplungseinrichtung sind das Griffelement und das Gehäuse bezüglich der Drehachse des Schneidkopfes relativ zueinander drehbar. Um den Schneidfaden auf die Fadenspule aufzuwickeln, hält der Bediener beispielsweise mit seiner einen Hand das Gehäuse des Schneidkopfes fest, und dreht mit seiner anderen Hand das Griffelement bezogen auf die Drehachse des Schneidkopfes in Drehrichtung. Da in der Wickelstellung der Kupplungseinrichtung das Griffelement und die Fadenspule durch die Kupplungseinrichtung drehfest miteinander verbunden sind, dreht sich auch die Fadenspule relativ zum Gehäuse des Schneidkopfes. Der Schneidfaden wickelt sich dabei auf die Fadenspule auf. Der Schneidfaden ist über das Gehäuse und die Fadenspule derart geführt, dass ein versehentliches Abwickeln beziehungsweise Abspringen des Schneidfadens von der Fadenspule vermieden werden kann. Der Bediener kann auf einfache Art und Weise den Schneidfaden aufwickeln.

Ist der Schneidfaden auf die Fadenspule aufgewickelt, kann die Kupplungseinrichtung in die Betriebsstellung geschalten werden. Die Betriebsstellung ist dazu vorgesehen, den Schneidkopf von einem Arbeitsgerät angetrieben um seine Drehachse rotieren zu lassen, und mittels der freien Schneidfadenabschnitte Gras oder Gestrüpp zu schneiden. Hierfür sind das Griffelement und das Gehäuse durch die Kupplungseinrichtung bezogen auf die Drehachse des Schneidkopfes drehfest miteinander verbunden. Über die Stelleinrichtung wird Schneidfaden nach Unterschreiten einer vorbestimmten Länge der freien Schneidfadenabschnitte nachgestellt. Die Nachstellung erfolgt fliehkraftbetätigt. Somit erfolgt die Nachstellung automatisch.

Der erfindungsgemäße Schneidkopf ermöglicht also das automatische Nachstellen des Schneidfadens und zugleich ein komfortables Aufwickeln des Schneidfadens auf die Fadenspule, während die Fadenspule im Gehäuse des Schneidkopfes gehalten ist.

Es ist insbesondere vorgesehen, dass die Kupplungseinrichtung ein Verbindungselement zur drehfesten Verbindung des Gehäuses und des Griffelementes aufweist, und dass die Kupplungseinrichtung eine Schalteinheit umfasst, wobei das Verbindungselement durch die Schalteinheit in die Wickelstellung und in die Betriebsstellung schaltbar ist. Das Verbindungselement ist vorzugsweise als ein Verbindungsring ausgebildet. Das Verbindungselement ist insbesondere koaxial zur Drehachse des Schneidkopfes ausgerichtet. Das Verbindungselement umgreift vorzugsweise die Wellenaufnahme. Das Verbindungselement ist insbesondere drehfest mit der Wellenaufnahme verbunden und insbesondere in Richtung der Drehachse des Schneidkopfes bewegbar zur Wellenaufnahme gelagert.

Es ist vorzugsweise vorgesehen, dass die Schalteinheit mindestens ein Schaltelement aufweist, wobei das mindestens eine Schaltelement in der Wickelstellung der Kupplungseinrichtung mit seinem einen Ende in den Aufnahmeraum der Wellenaufnahme derart ragt, dass dieses beim Einführen einer Abtriebswelle durch die Abtriebswelle in die Betriebsstellung der Kupplungseinrichtung betätigbar ist. Wird der Schneidkopf auf die Abtriebswelle aufgeschoben, wird automatisch das Schaltelement durch die Abtriebswelle betätigt, so dass die Kupplungseinrichtung in die Betriebsstellung geschalten wird.

Das mindestens eine Schaltelement ist insbesondere als ein Schwenkhebel ausgebildet, wobei der Schwenkhebel an der Wellenaufnahme angeordnet und schwenkbar gelagert ist, wobei der Schwenkhebel über das eine Ende im Aufnahmeraum der Wellenaufnahme betätigbar ist, und wobei ein anderes Ende des Schwenkhebels auf das Verbindungselement wirkt. Das Verbindungselement ist vorzugsweise in der Betriebsstellung der Kupplungseinrichtung mit dem Gehäuse formschlüssig, insbesondere mittels einer Stirnzahnverbindung, drehfest verbunden. Wird der Schneidkopf auf die Abtriebswelle aufgeschoben, dringt diese in den Aufnahmeraum der Wellenaufnahme ein und kontaktiert das eine Ende des Schaltelementes, insbesondere des Schwenkhebels. Das Schaltelement, insbesondere der Schwenkhebel, schwenkt um eine Drehachse, so dass das eine Ende des Schwenkhebels durch die Abtriebswelle aus dem Aufnahmeraum zumindest teilweise herausgeschoben wird. Das andere Ende des Schaltelementes, insbesondere des Schwenkhebels, erfährt in Folge ebenfalls eine Bewegung und wirkt dabei auf das Verbindungselement. Dieses wird über das andere Ende des Schaltelementes gegen das Gehäuse geschoben, wobei das Verbindungselement und das Gehäuse dabei eine formschlüssige Verbindung eingehen. Wird der Schneidkopf von der Abtriebswelle gezogen, kann das eine Ende des Schaltelementes, insbesondere des Schwenkhebels, wieder zurück in den Aufnahmeraum der Wellenaufnahme schwenken, wodurch die formschlüssige Verbindung zwischen dem Verbindungselement und dem Gehäuse aufgehoben ist.

Es ist insbesondere vorgesehen, dass die Stelleinrichtung mindestens eine Klinke umfasst, die in Richtung der Drehachse feststehend zum Gehäuse angeordnet ist, und dass die Stelleinrichtung ein mit der Fadenspule drehfest verbundenes Stellelement mit mindestens einem Klinkenanschlag umfasst, wobei die Klinke derart ausgebildet ist, dass diese in Abhängigkeit der Fliehkraft dem Klinkenanschlag ausweicht, wodurch sich die Fadenspule relativ zum Gehäuse dreht und Schneidfaden nachführt. Die Stelleinrichtung umfasst insbesondere eine Feder, die die Klinke in eine Sperrstellung vorspannt. Die Klinke umfasst insbesondere ein Betätigungsgewicht, das in Abhängigkeit der Fliehkraft ein entsprechendes Drehmoment auf die Klinke bewirkt und der Vorspannung der Feder entgegenwirkt. Bei Reduzierung der Länge des freien Schneidfadenabschnittes reduzieren sich auch die Fliehkräfte, die an dem Schneidfaden wirken. Somit reduziert sich auch das Moment, welches die Klinkenanschläge, die mit der Fadenspule drehfest verbunden sind, gegen die Klinken spannt. Das Betätigungsgewicht der Klinke, die Feder sowie die Länge des freien Schneidfadenabschnittes sind insbesondere derart aufeinander abgestimmt, dass bei Unterschreitung einer vorbestimmten Mindestlänge des freien Schneidfadenabschnittes die Klinke dem Klinkenanschlag ausweicht und eine Relativdrehung der Fadenspule und des Gehäuses zugelassen wird. Dabei stellt sich der Schneidfaden nach, bis die Klinke erneut an einem Klinkenanschlag anschlägt.

Es ist insbesondere vorgesehen, dass das Stellelement eine Wickelkontur und eine von der Wickelkontur verschiedene Nachstellkontur umfasst, wobei die mindestens eine Klinke ein Führungselement aufweist, das in Abhängigkeit der Drehrichtung des Stellelementes relativ zum Gehäuse entweder mit der Wickelkontur oder der Nachstellkontur wechselwirkt. Die Wickelkontur sowie die Nachstellkontur bedingen durch die Führung des Führungselementes eine Zwangsbewegung der Klinke. So wird durch die Nachstellkontur des Stellelementes beispielsweise ein Überspringen der Klinke eines Klinkenanschlages vermieden. Durch die Wickelkontur kann eine Drehung der Fadenspule in Drehrichtung bei festgehaltenem Gehäuse sichergestellt werden.

Es ist insbesondere vorgesehen, dass das Stellelement einen Kreuzungsabschnitt aufweist, an dem sich die Wickelkontur und die Nachstellkontur kreuzen, wobei ein Sperrelement drehrichtungsabhängig die Wickelkontur oder die Nachstellkontur freigibt. Hierdurch können die beiden Konturen bezogen auf eine senkrecht zur Drehachse des Schneidkopfes ausgerichteten Ebene auf einer gemeinsamen Ebene verlaufen und sich zugleich voneinander unterscheiden. Die Zwangsführung der Klinke ist somit für die jeweilige Kontur verschieden und damit dem Zweck angepasst. Das Sperrelement weist bezüglich der Drehachse insbesondere eine Radialfläche auf, die Teil der Nachstellkontur ist. Zudem weist das Stellelement bezüglich der Drehachse des Schneidkopfes insbesondere eine Axialfläche auf, die Teil der Wickelkontur ist. Das Sperrelement ist insbesondere als eine bezüglich der Drehachse in Axialrichtung federnde Zunge ausgebildet.

Ein weiterer Nachteil des aus dem Stand der Technik bekannten Schneidkopfes besteht darin, dass beim Nachstellen des Schneidfadens zu viel Schneidfaden dem freien Schneidfadenabschnitt zugeführt wird. Üblicherweise umfassen Arbeitsgeräte, wie Freischneider, Motorsensen oder dergleichen, ein Ablängmesser. Ist Schneidfaden nachgeführt, wird dieser bei Drehung des Schneidkopfes gegen ein Messer geführt und abgeschnitten, so dass der freie Schneidfadenabschnitt auf eine vorbestimmte Länge begrenzt wird. Nachteilig hierbei ist ein Verbrauch des Schneidfadens ohne dessen Nutzung.

Es ist daher weitere Aufgabe der Erfindung, einen Schneidkopf der gattungsgemäßen Art anzugeben, der eine verbesserte, automatische Nachstellung des Schneidfadens erlaubt.

Diese Aufgabe wird durch einen Schneidkopf gemäß den Merkmalen des Anspruchs 10 gelöst.

Der erfindungsgemäße Schneidkopf umfasst ein Gehäuse, eine Wellenaufnahme mit einem Aufnahmeraum zur Befestigung des Schneidkopfes an einer Abtriebswelle eines Arbeitsgerätes, wobei der Schneidkopf über die Abtriebswelle um eine Drehachse des Schneidkopfes in eine Drehrichtung antreibbar ist, eine im Gehäuse angeordnete Fadenspule zur Aufnahme mindestens eines Schneidfadens, eine Stelleinrichtung, die derart ausgebildet ist, dass durch das Zulassen einer Relativdrehung zwischen Fadenspule und Gehäuse eine freie Schneidfadenlänge eines Schneidfadens in Abhängigkeit der Fliehkraft nachstellbar ist, wobei die Stelleinrichtung mindestens zwei Klinken umfasst, die fliehkraftbetätigt sind und in Richtung der Drehachse feststehend zum Gehäuse ausgebildet sind, und wobei der Schneidkopf mindestens einen Klinkenanschlag aufweist, der bezüglich der Drehachse des Schneidkopfes drehfest zur Fadenspule ausgebildet ist, wobei das Gehäuse in Drehrichtung des Schneidkopfes drehfest mit der Fadenspule verbunden ist, wenn mindestens eine der mindestens zwei Klinken an dem mindestens einen Klinkenanschlag anliegt, wobei das Gehäuse in Drehrichtung des Schneidkopfes relativ zur Fadenspule drehbar ist, wenn keine der mindestens zwei Klinken an dem mindestens einen Klinkenanschlag anliegen, wobei die Anzahl des mindestens einen Klinkenanschlages ungleich dem Vielfachen der Anzahl der mindestens zwei Klinken ist, und wobei die mindestens zwei Klinken und der mindestens eine Klinkenanschlag derart zueinander angeordnet sind, dass die mindestens zwei Klinken wechselseitig im Eingriff mit dem mindestens einen Klinkenanschlag sind.

Durch den wechselseitigen Eingriff der mehreren Klinken kann die Länge, um die der freie Schneidfadenabschnitt 59 verlängert werden soll, verkürzt, insbesondere halbiert werden, ohne die Anzahl der Klinkenanschläge oder die Anzahl der Klinken zu erhöhen. Das Nachstellen des Schneidfadens unterliegt einer deutlich feineren Nachstellrasterung. Die feinere Nachstellrasterung kann ohne Einsatz zusätzlicher Bauteile, beispielsweise weiterer Klinken, erzielt werden. Durch die feinere Nachstellrasterung wird der freie Schneidfadenabschnitt um nur kurze Schneidfadenabschnitte verlängert. Dadurch wird der Verbrauch ungenützter Schneidfadenabschnitte, beispielsweise durch Ablängung des freien Schneidfadenabschnittes mittels eines Ablängmessers, erheblich reduziert.

Es ist insbesondere vorgesehen, dass die Stelleinrichtung mindestens eine Klinke umfasst, die in Richtung der Drehachse feststehend zum Gehäuse angeordnet ist, und dass die Stelleinrichtung ein mit der Fadenspule drehfest verbundenes Stellelement mit mindestens einem Klinkenanschlag umfasst, wobei die Klinke derart ausgebildet ist, dass diese in Abhängigkeit der Fliehkraft dem Klinkenanschlag ausweicht, wodurch sich die Fadenspule relativ zum Gehäuse dreht und Schneidfaden nachführt. Die Stelleinrichtung umfasst insbesondere eine Feder, die die Klinke in eine Sperrstellung vorspannt. Die Klinke umfasst insbesondere ein Betätigungsgewicht, das in Abhängigkeit der Fliehkraft ein entsprechendes Drehmoment auf die Klinke bewirkt und der Vorspannung der Feder entgegenwirkt. Bei Reduzierung der Länge des freien Schneidfadenabschnittes reduzieren sich auch die Fliehkräfte, die an dem Schneidfaden wirken. Somit reduziert sich auch das Moment, welches die Klinkenanschläge, die mit der Fadenspule drehfest verbunden sind, gegen die Klinken spannt. Das Betätigungsgewicht der Klinke, die Feder sowie die Länge des freien Schneidfadenabschnittes sind insbesondere derart aufeinander abgestimmt, dass bei Unterschreitung einer vorbestimmten Mindestlänge des freien Schneidfadenabschnittes die Klinke dem Klinkenanschlag ausweicht und eine Relativdrehung der Fadenspule und des Gehäuses zugelassen wird. Dabei stellt sich der Schneidfaden nach, bis die Klinke erneut an einem Klinkenanschlag anschlägt.

Es ist insbesondere vorgesehen, dass das Stellelement eine Wickelkontur und eine von der Wickelkontur verschiedene Nachstellkontur umfasst, wobei die mindestens eine Klinke ein Führungselement aufweist, das in Abhängigkeit der Drehrichtung des Stellelementes relativ zum Gehäuse entweder mit der Wickelkontur oder der Nachstellkontur wechselwirkt. Die Wickelkontur sowie die Nachstellkontur bedingen durch die Führung des Führungselementes eine Zwangsbewegung der Klinke. So wird durch die Nachstellkontur des Stellelementes beispielsweise ein Überspringen der Klinke eines Klinkenanschlages vermieden. Durch die Wickelkontur kann eine Drehung der Fadenspule in Drehrichtung bei festgehaltenem Gehäuse sichergestellt werden.

Es ist insbesondere vorgesehen, dass das Stellelement einen Kreuzungsabschnitt aufweist, an dem sich die Wickelkontur und die Nachstellkontur kreuzen, wobei ein Sperrelement drehrichtungsabhängig die Wickelkontur oder die Nachstellkontur freigibt. Hierdurch können die beiden Konturen bezogen auf eine senkrecht zur Drehachse des Schneidkopfes ausgerichteten Ebene auf einer gemeinsamen Ebene verlaufen und sich zugleich voneinander unterscheiden. Die Zwangsführung der Klinke ist somit für die jeweilige Kontur verschieden und damit dem Zweck angepasst. Das Sperrelement weist bezüglich der Drehachse insbesondere eine Radialfläche auf, die Teil der Nachstellkontur ist. Zudem weist das Stellelement bezüglich der Drehachse des Schneidkopfes insbesondere eine Axialfläche auf, die Teil der Wickelkontur ist. Das Sperrelement ist insbesondere als eine bezüglich der Drehachse in Axialrichtung federnde Zunge ausgebildet.

Ein eigenständiger Erfindungsgedanke sieht einen Schneidkopf vor, umfassend ein Gehäuse, wobei der Schneidkopf über die Abtriebswelle um eine Drehachse des Schneidkopfes in eine Drehrichtung antreibbar ist, eine im Gehäuse angeordnete Fadenspule zur Aufnahme mindestens eines Schneidfadens, eine Stelleinrichtung, wobei die Stelleinrichtung zum Nachstellen einer freien Schneidfadenlänge eines Schneidfadens in Abhängigkeit der Fliehkraft ausgebildet ist, wobei die Stelleinrichtung mindestens eine Klinke umfasst, wobei die Stelleinrichtung ein mit der Fadenspule drehfest verbundenes Stellelement mit mindestens einem Klinkenanschlag umfasst, wobei die mindestens eine Klinke derart ausgebildet ist, dass diese in Abhängigkeit der Fliehkraft dem Klinkenanschlag ausweicht, wodurch sich die Fadenspule relativ zum Gehäuse dreht und Schneidfaden nachführt, wobei das Stellelement eine Wickelkontur und eine von der Wickelkontur verschiedene Nachstellkontur umfasst, wobei die mindestens eine Klinke ein Führungselement aufweist, das in Abhängigkeit der Drehrichtung des Stellelementes relativ zum Gehäuse entweder mit der Wickelkontur oder der Nachstellkontur wechselwirkt, und
wobei das Stellelement einen Kreuzungsabschnitt aufweist, an dem sich die Wickelkontur und die Nachstellkontur kreuzen, wobei ein Sperrelement drehrichtungsabhängig die Wickelkontur oder die Nachstellkontur am Kreuzungsabschnitt freigibt.

Hierdurch können die beiden Konturen bezogen auf eine senkrecht zur Drehachse des Schneidkopfes ausgerichteten Ebene auf einer gemeinsamen Ebene verlaufen und sich zugleich voneinander unterscheiden. Die Zwangsführung der Klinke ist somit für die jeweilige Kontur verschieden und damit dem Zweck angepasst.

Das Sperrelement weist bezüglich der Drehachse insbesondere eine Radialfläche auf, die Teil der Nachstellkontur ist. Zudem weist das Stellelement bezüglich der Drehachse des Schneidkopfes insbesondere eine Axialfläche auf, die Teil der Wickelkontur ist. Das Sperrelement ist insbesondere als eine bezüglich der Drehachse in Axialrichtung federnde Zunge ausgebildet.

Weitere Merkmale der Erfindung ergeben sich aus der Beschreibung und der Zeichnung, in der ein nachfolgend im Einzelnen beschriebenes Ausführungsbeispiel der Erfindung dargestellt ist. Es zeigen:
- Fig. 1: in einer Seitendarstellung ein handgeführtes Arbeitsgerät mit einem Schneidkopf,
- Fig. 2: in einer perspektivischen Darstellung von oben ein erfindungsgemäßer Schneidkopf,
- Fig. 3: in einer perspektivischen Darstellung von unten der Schneidkopf nach Fig. 2,
- Fig. 4: in einer perspektivischen Darstellung von oben der Schneidkopf nach Fig. 2 demontiert in Gehäuseoberteil, Fadenspule, Feder und Gehäuseunterteil,
- Fig. 5: in einer perspektivischen Darstellung von unten der Schneidkopf nach Fig. 2 demontiert in Gehäuseoberteil, Fadenspule, Feder und Gehäuseunterteil,
- Fig. 6: in einer Schnittdarstellung entlang der Drehachse des Schneidkopfes der Schneidkopf nach Fig. 2 in Wickelstellung der Kupplungseinrichtung,
- Fig. 7: in einer Schnittdarstellung entlang der Drehachse des Schneidkopfes der Schneidkopf nach Fig. 2 in Betriebsstellung der Kupplungseinrichtung,
- Fig. 8: in einer perspektivischen Explosionsdarstellung das Gehäuseoberteil, das Stellelement und das Verbindungselement,
- Fig. 9: in einer perspektivischen Explosionsdarstellung das Gehäuseoberteil, die Wellenaufnahme sowie die Stelleinrichtung,
- Fig. 10 bis 16: in Schnittdarstellungen mit Blickrichtung in Richtung der Drehachse zum Gehäuseunterteil hin den Schneidkopf in einem Nachstellzyklus des Schneidfadens,
- Fig. 17 bis 24: in Schnittdarstellung mit Blickrichtung in Richtung der Drehachse zum Gehäuseunterteil hin den Schneidkopf in einem Aufwickelzyklus eines Schneidfadens sowie in perspektivischen Darstellungen die Bewegungsabfolge des Führungselementes der Klinke entlang der Wickelkontur.

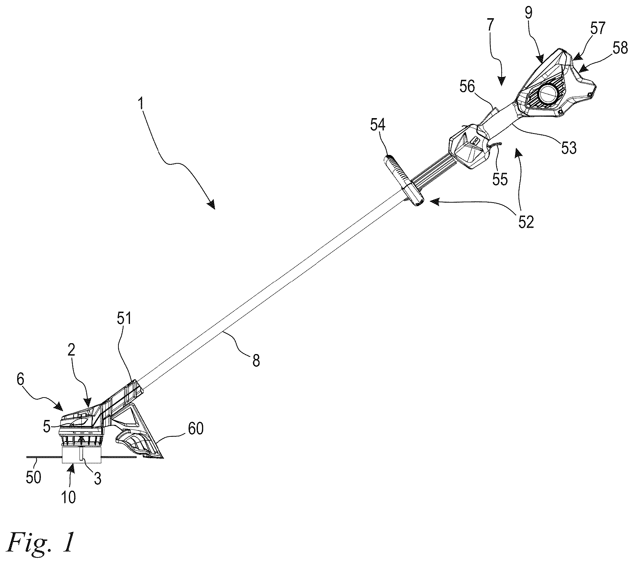

Fig. 1 zeigt in einer Seitendarstellung ein handgeführtes Arbeitsgerät - nachfolgend als Arbeitsgerät bezeichnet. Besonders bevorzugt ist das Arbeitsgerät als handgeführtes, tragbares Arbeitsgerät ausgebildet. Unter dem Begriff "tragbares Arbeitsgerät" ist ein Arbeitsgerät zu verstehen, dass derart ausgelegt ist, dass es in seinem bestimmungsgemäßen Betrieb vom Bediener zu tragen und von Hand zu führen ist. Das Arbeitsgerät 1 ist vorliegend als Freischneider ausgebildet.

Wie in Fig. 1 gezeigt, umfasst das Arbeitsgerät 1 ein Motorgehäuse 2. In dem Motorgehäuse 2 ist ein Antriebsmotor 5 angeordnet, der als Elektromotor ausgebildet ist. Der Antriebsmotor 5 ist in Fig. 1 schematisch durch ein strichliertes Rechteck dargestellt. Der Antriebsmotor 5 dient zum Antrieb eines Schneidwerkzeuges, vorliegend eines Schneidfadens 50, welcher in Fig. 1 schematisch dargestellt ist. Der Schneidfaden 50 ist an einem Schneidkopf 10 befestigt. Der Schneidkopf 10 wird gemeinsam mit dem Schneidwerkzeug 50 über eine Abtriebswelle 3 drehend angetrieben. Der Schneidfaden 50 dient zum Schneiden von Schnittgut wie Gras, Gestrüpp oder dgl.

Das Arbeitsgerät 1 besitzt ein vorderes Ende 6 und ein hinteres Ende 7. Das vordere Ende 6 ist durch das Motorgehäuse 2 gebildet. An dem Motorgehäuse 2 ist eine Aufnahme 51 vorgesehen. Über die Aufnahme 51 ist ein Schaft 8 an dem Motorgehäuse 2 befestigt. Der Schaft 8 erstreckt sich bis zum hinteren Ende 7 des Arbeitsgerätes 1, welches durch ein hinteres Gehäuse 9 gebildet ist. An dem hinteren Gehäuse 9 und/oder dem Schaft 8 ist eine Griffeinheit 52 vorgesehen, die zum Führen des Arbeitsgerätes 1 dient. Die Griffeinheit 52 umfasst einen hinteren, ersten Griff 53 und einen vorderen, zweiten Griff 54. Dem ersten Griff 53 ist ein Betätigungshebel 55 zur Steuerung der Drehzahl des Antriebsmotors 5 zugeordnet. Ferner ist dem ersten Griff 53 ein Sperrhebel 56 zur Freigabe und zum Sperren des Betätigungshebels 55 zugeordnet. Der Begriff "zugeordnet" ist derart zu verstehen, dass die dem Griff zugeordneten Hebel derart gegenüber dem Griff angeordnet sind, dass diese mit der auf dem Griff liegenden Hand zu betätigen sind. Vorteilhaft sind der Betätigungshebel 55 und/oder der Sperrhebel 56 Teil des ersten Griffes 53. Es kann jedoch auch vorgesehen sein, dass der Betätigungshebel 55 und/oder der Sperrhebel 56 außerhalb des ersten Griffes 53 liegen. Beabstandet zum ersten Griff 53 in Richtung zum vorderen Ende 6 des Arbeitsgerätes 1 ist der zweite Griff 54 angeordnet, der als Bügelgriff ausgebildet ist. Ferner umfasst das hintere Gehäuse 9 einen Akkuschacht 57, in welchem mindestens ein Akkupack 58 als elektrische Energiequelle für den Antriebsmotor 5 angeordnet ist. Über den Schaft 8 sind das Motorgehäuse 2 und das hintere Gehäuse 9 miteinander verbunden. Der Schaft 8 kann auch als teleskopierbarer Schaft ausgebildet sein. Der Schneidkopf 10 ist in Richtung zur Griffeinheit 52 von einer Schutzhaube 60 abgedeckt. Die Schutzhaube 60 ist an dem Gehäuse 2 befestigt.

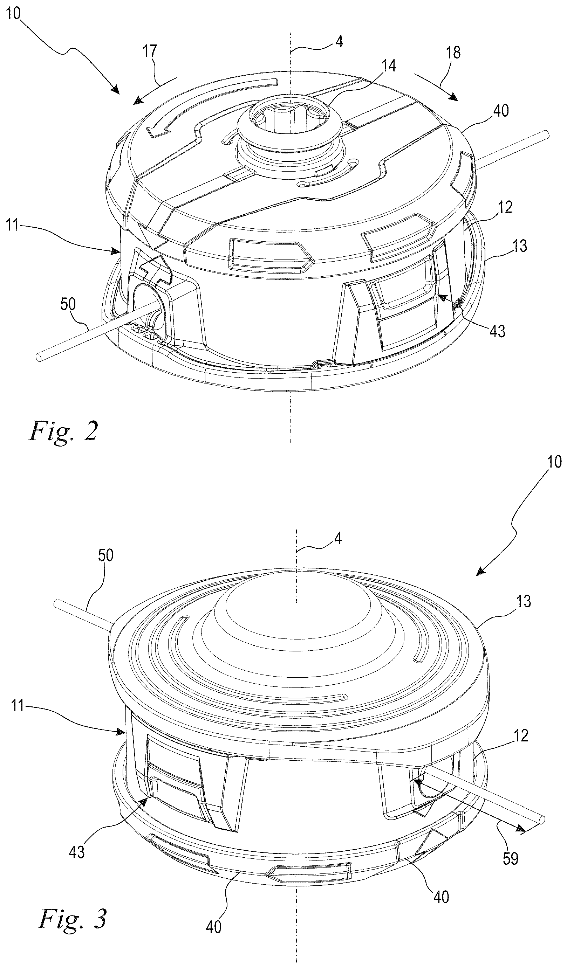

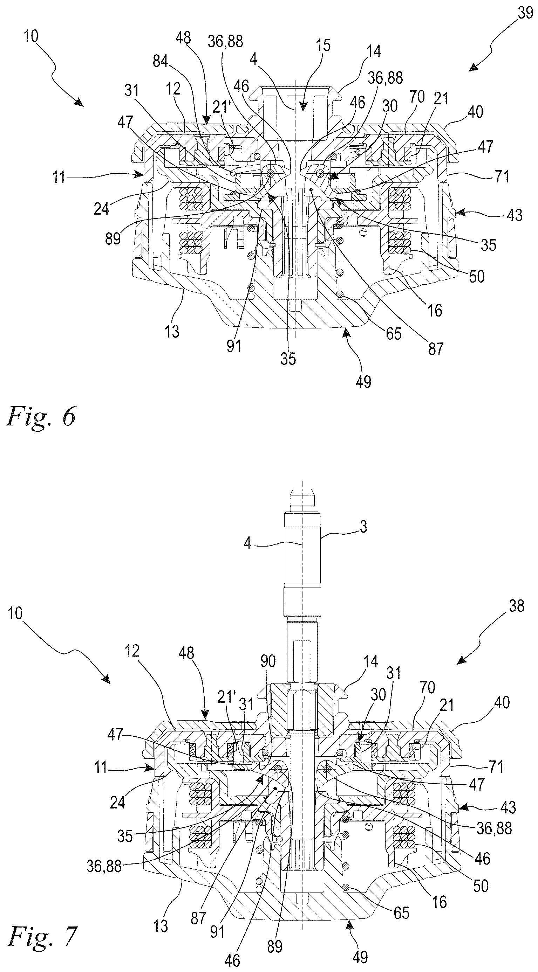

Fig. 2 zeigt eine Ausführung des erfindungsgemäßen Schneidkopfes 10. Der Schneidkopf 10 umfasst ein Gehäuse 11. Ferner umfasst der Schneidkopf 10 eine Wellenaufnahme 14 zur Anbindung des Schneidkopfes 10 an der Abtriebswelle 3 des Arbeitsgerätes 1. Die Wellenaufnahme 14 weist einen Aufnahmeraum 15 auf (Fig. 6). Zur Befestigung des Schneidkopfes 10 an der Abtriebswelle 3 ist die Abtriebswelle 3 in den Aufnahmeraum 15 der Wellenaufnahme 14 einzuführen. Die Abtriebswelle 3 und die Wellenaufnahme 14 sind vorzugsweise über eine Polygonverbindung und/oder eine Keilwellenverbindung bezogen auf die Drehachse 4 des Schneidkopfes 10 drehfest miteinander verbindbar. Die Wellenaufnahme 14 ist im Ausführungsbeispiel als eine Hohlwelle ausgebildet. Über die Abtriebswelle 3 ist der Schneidkopf 10 um eine Drehachse 4 drehend antreibbar. Die Drehachse 4 des Schneidkopfes 10 entspricht der Drehachse der Abtriebswelle 3. Der Schneidkopf 10 ist vorzugsweise derart ausgebildet, dass dieser in eine Drehrichtung 17 antreibbar ist. Im bestimmungsgemäßen Betrieb des Schneidkopfes 10 zum Schneiden von Gestrüpp, Gras und dergleichen, ist der Schneidkopf 10 um seine Drehachse 4 in Drehrichtung 17 angetrieben.

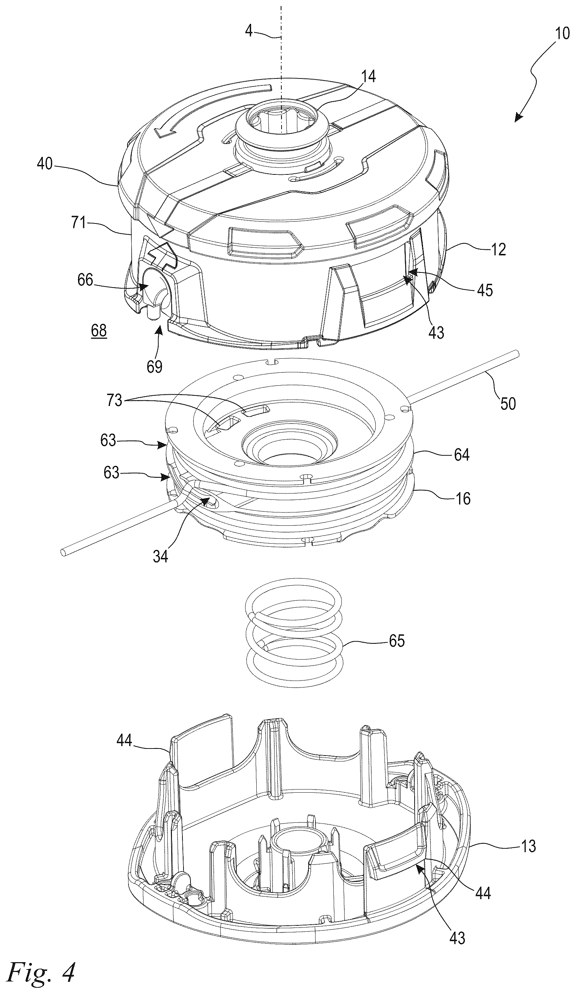

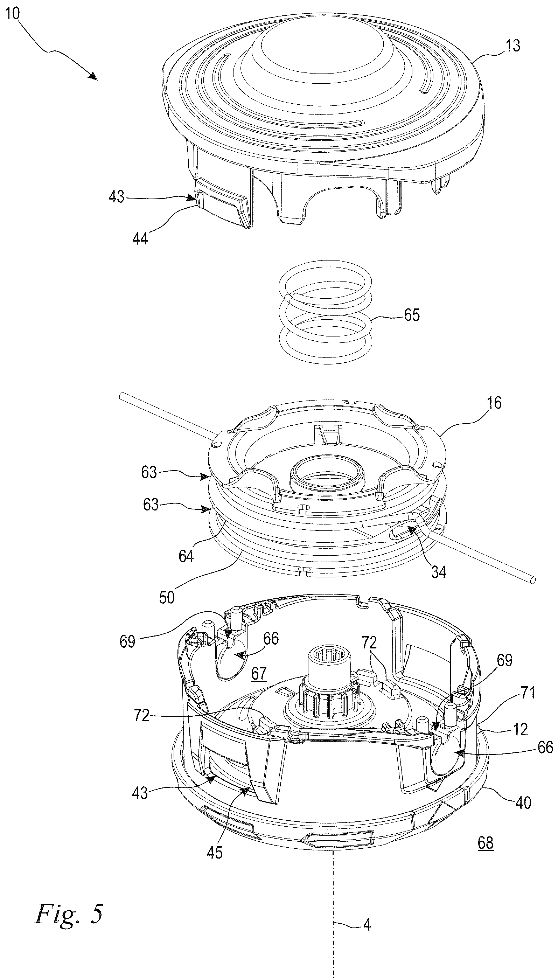

Wie in den Figuren 2 und 3 gezeigt, umfasst das Gehäuse 11 ein Gehäuseoberteil 12 und ein Gehäuseunterteil 13. Das Gehäuseoberteil 12 und das Gehäuseunterteil 13 sind lösbar miteinander verbunden. Das Gehäuseoberteil 12 ist, wie in den Figuren 4 und 5 gezeigt, in etwa topfförmig ausgebildet. In anderen Worten weist das Gehäuseoberteil 12 einen sich im Wesentlichen radial zur Drehachse 4 des Schneidkopfes 10 erstreckenden Boden 70 auf (Fig. 6 und 7). Ferner weist das Gehäuseoberteil 12 eine sich im Wesentlichen in Richtung der Drehachse 4 erstreckende Umfangswand 71 auf. Die Umfangswand 71 des Gehäuseoberteils 12 schließt unmittelbar an dem Boden 70 des Gehäuseoberteils 12 an. Das Gehäuseoberteil 12 liegt mit seiner Umfangswand 71 unmittelbar auf dem Gehäuseunterteil 13 auf. Die Verbindung zwischen dem Gehäuseoberteil 12 und dem Gehäuseunterteil 13 ist derart ausgebildet, dass diese vorzugsweise werkzeuglos herstellbar und wieder lösbar ist. Die Verbindung ist als eine bezüglich der Drehachse 4 des Schneidkopfes 10 drehfeste Verbindung ausgebildet. Die Verbindung ist vorzugsweise als eine Schnappverbindung 43 ausgebildet. Die Schnappverbindung 43 ist durch mindestens einen Haken 44 und mindestens eine mit dem mindestens einen Haken 44 in Wechselwirkung stehenden Öffnung 45 (Fig. 5) der Schnappverbindung 43 gebildet. Der mindestens eine Haken 44 ist im vorliegenden Ausführungsbeispiel an dem Gehäuseunterteil 13 ausgebildet. Die mindestens eine Öffnung 45 ist an dem Gehäuseoberteil 12, insbesondere an der Umfangswand 71 des Gehäuseoberteils 12, ausgebildet. Im vorliegenden Ausführungsbeispiel sind zwei Haken 44 und zwei mit den Haken 44 korrespondierenden Öffnungen 45 vorgesehen. Auch eine andere Anzahl Haken 44 und Öffnungen 45 kann zweckmäßig sein. Auch andere Verbindungen zur Verbindung von Gehäuseoberteil 12 und Gehäuseunterteil 13 können zweckmäßig sein.

Ferner umfasst der Schneidkopf 10 das Schneidwerkzeug 50, das vorliegend als ein Schneidfaden ausgebildet ist. Der mindestens eine Schneidfaden 50 ragt aus dem Gehäuse 11 des Schneidkopfes 10. Der Abschnitt des Schneidfadens 50, der aus dem Gehäuse 11 ragt, ist nachfolgend als freier Schneidfadenabschnitt 59 bezeichnet (Fig. 3).

Wie in den Figuren 2 und 3 gezeigt, umfasst der Schneidkopf 10 ein Griffelement 40. Das Griffelement 40 ist insbesondere außerhalb des Gehäuses 11 des Schneidkopfes 10 angeordnet. Das Griffelement 40 ist als eine Griffscheibe ausgebildet. Die Griffscheibe überragt radial zur Drehachse 4 des Schneidkopfes 10 das benachbarte Gehäuseteil zumindest teilweise. In montiertem Zustand des Schneidkopfes 10 ist das Griffelement 40 dem Bediener zugänglich, d.h. der Bediener kann den Schneidkopf 10 an dem Griffelement 40 halten. Vorliegend ist das Griffelement 40 oberhalb des Gehäuseoberteils 12, insbesondere auf dem Gehäuseoberteil 12, angeordnet. Somit überragt das Griffelement 40, insbesondere die Griffscheibe, das Gehäuseoberteil 12 bezogen auf die Drehachse 4 des Schneidkopfes 10 in radialer Richtung von der Drehachse 4 weg. So kann der Bediener den Schneidkopf 10 auf einfache Weise an dem Griffelement 40 halten. Das Griffelement 40 ist im Ausführungsbeispiel bezogen auf die Drehachse 4 des Schneidkopfes 10 drehfest mit der Wellenaufnahme 14 verbunden. Die Verbindung zwischen der Wellenaufnahme 14 und dem Griffelement 40 ist vorzugsweise als formschlüssige Verbindung ausgebildet. Das Griffelement 40 liegt insbesondere unmittelbar an der Wellenaufnahme 14 an. Das Griffelement 40 ist vorzugsweise auch in Richtung der Drehachse 4 des Schneidkopfes 10 mit der Wellenaufnahme 14 fest verbunden, insbesondere formschlüssig an der Wellenaufnahme 14 gehalten. In einer alternativen Ausführung des Schneidkopfes 10 kann es auch vorgesehen sein, dass die Wellenaufnahme 14 und das Griffelement 40 einteilig ausgebildet sind.

Wie in den Figuren 6 und 7 gezeigt, umfasst der Schneidkopf 10 eine Oberseite 48 und eine Unterseite 49. Die Oberseite 48 des Schneidkopfes 10 ist die dem Arbeitsgerät 1 zugewandte Seite, wenn der Schneidkopf 10 an der Abtriebswelle 3 des Arbeitsgerätes 1 befestigt ist. Die Unterseite 49 des Schneidkopfes 10 ist die dem Boden 42 zugewandte Seite des Schneidkopfes 10, im bestimmungsgemäßen Betrieb des Schneidkopfes 10 befestigt an einem Arbeitsgerät 1, welches der Bediener vor sich trägt. Vorliegend ist die Unterseite 49 des Schneidkopfes 10 durch das Gehäuseunterteil 13 gebildet. Die Oberseite 48 des Schneidkopfes 10 ist durch das Griffelement 40 des Schneidkopfes 10 gebildet. Das Gehäuseoberteil 12 ist zwischen dem Griffelement 40 und dem Gehäuseunterteil 13 angeordnet.

Die Figuren 4 und 5 zeigen den Schneidkopf 10 in einem zumindest teilweise demontierten Zustand. Der Schneidkopf 10 umfasst eine Fadenspule 16 zur Aufnahme mindestens eines Schneidfadens. Ferner umfasst der Schneidkopf 10 ein erstes Federelement 65, wobei das Federelement 65 die Fadenspule 16 gegen das Gehäuseoberteil 12 des Schneidkopfes 10 drückt. Das erste Federelement 65 ist zwischen dem Gehäuseunterteil 13 und der Fadenspule 16 angeordnet. Das erste Federelement 65 stützt sich gegen eine Innenseite des Gehäuseunterteils 13 ab und drückt die Fadenspule 16, vorzugsweise unmittelbar, in Richtung der Drehachse 4 des Schneidkopfes 10 gegen das Gehäuseoberteil 12 des Schneidkopfes10. Das erste Federelement 65 ist als Spiralfeder ausgebildet und koaxial zur Drehachse 4 des Schneidkopfes 10 angeordnet. An der Fadenspule 16 ist mindestens ein Schneidfaden befestigt. In der vorliegenden Ausführung umfasst die Fadenspule 16 einen nicht näher dargestellten Fadenkanal, der zwei Öffnungen 34 der Fadenspule 16 miteinander verbindet. Die zwei Öffnungen 34 sind bezogen auf die Drehachse 4 des Schneidkopfes 10 in einem gleichmäßigen Winkelabstand zueinander angeordnet, der in etwa 180° beträgt. Zum Befestigen eines Schneidfadens an dem Schneidkopf 10 ist dieser mit einem seiner beiden Enden durch eine der beiden Öffnungen 34 der Fadenspule 16 einzufädeln, bis der Schneidfaden aus der anderen der beiden Öffnungen 34 der Fadenspule 16 herausragt. Anschließend ist der Schneidfaden derart zum Fadenkanal auszurichten, dass die beiden aus den Öffnungen 34 ragenden Enden des Schneidfadens in etwa gleich lang sind. Dann kann der Schneidfaden aufgewickelt werden. Hierfür hat die Fadenspule 16 zwei Fadenkammern 63. In einer jeden Fadenkammer 63 ist ein Ende des Schneidfadens aufzuwickeln. Die Fadenkammern 63 sind insbesondere durch eine sich radial zur Drehachse des Schneidkopfes 10 erstreckende Trennwand 64 voneinander getrennt. Anstelle nur eines Schneidfadens können auch zwei Schneidfäden an der Fadenspule 16 befestigt werden. Hierfür sind vorzugsweise nicht näher dargestellte Öffnungen an der Fadenspule 16, insbesondere in der jeweiligen Fadenkammer 63 vorgesehen, in die der Schneidfaden einzustecken ist. Der Schneidfaden wird umgeknickt und in der jeweiligen Fadenkammer 63 der Fadenspule 16 aufgewickelt.

Wie insbesondere in den Figuren 4 und 5 gezeigt, umfasst das Gehäuse 11 des Schneidkopfes 10 mindestens eine Austrittsöffnung 66, durch die der Schneidfaden aus dem Gehäuse 11 ragt. Der Schneidfaden ist an der Fadenspule 16 befestigt und über die Austrittsöffnung 66 des Gehäuses 11 aus einem Innenraum 67 des Gehäuses 11 in die Außenumgebung 68 des Schneidkopfes 10 geführt. Die Fadenspule 16 ist im Innenraum 67 des Gehäuses 11 des Schneidkopfes 10 angeordnet. Der Innenraum 67 ist durch das Gehäuse 11 des Schneidkopfes 10 begrenzt. In der vorliegenden Ausführung des Schneidkopfes 10 sind zwei Austrittsöffnungen 66 vorgesehen. Auch eine andere Anzahl an Austrittsöffnungen 66 kann zweckmäßig sein. Die Austrittsöffnung 66 ist im Wesentlichen im Gehäuseoberteil 12, insbesondere an der Umfangswand 71 des Gehäuseoberteils 12, ausgebildet. An der Austrittsöffnung 66 im Gehäuseoberteil 12 ist ein Schlitz 69 vorgesehen, über welchen der Schneidfaden in die Austrittsöffnung 66 auf einfache Weise eingefädelt werden kann. Der Schlitz 69 ermöglicht ein Einlegen des Schneidfadens in die Austrittsöffnung 66 in Richtung der Drehachse 4 des Schneidkopfes 10. Der Schneidfaden durchragt die Austrittsöffnung 69 wiederum radial zur Drehachse 4 des Schneidkopfes 10. Ist der Schneidkopf 10 montiert, wird der Schlitz 69 an der Austrittsöffnung 69 durch das Gehäuseunterteil 13 geschlossen.

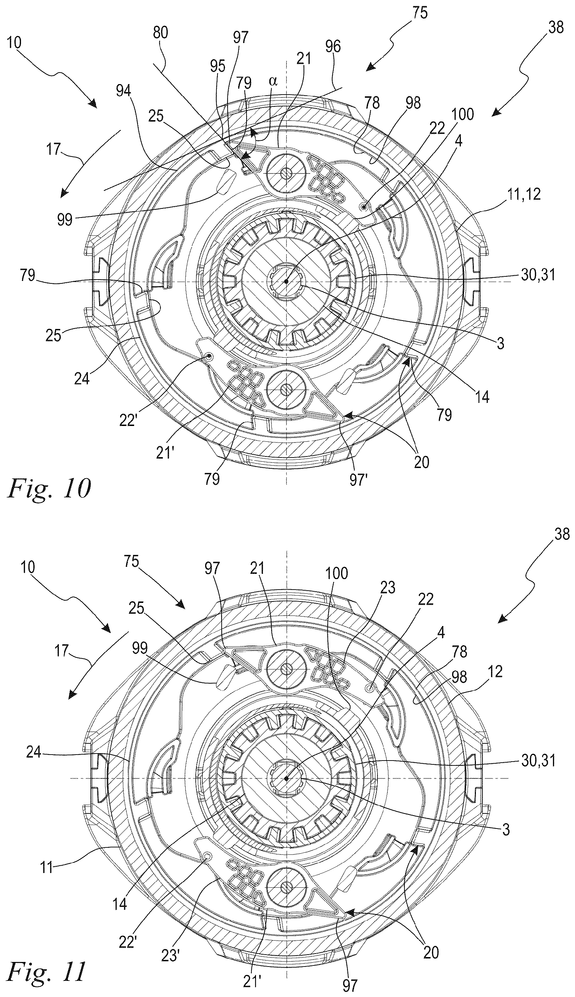

Der Schneidkopf 10 umfasst eine Stelleinrichtung 20 (Fig. 10), die ein automatisches Nachstellen des freien Schneidfadenabschnittes 59 im Betrieb des Schneidkopfes 10 ermöglicht. Die Nachstellung des freien Schneidfadenabschnittes 59 erfolgt über eine Relativdrehung zwischen der Fadenspule 16 und dem Gehäuse 11 des Schneidkopfes 10, wodurch sich der Schneidfaden von der Fadenspule 16 abwickelt und aus der Austrittsöffnung 66 geführt wird. Die Stelleinrichtung 20 ist fliehkraftbetätigt.

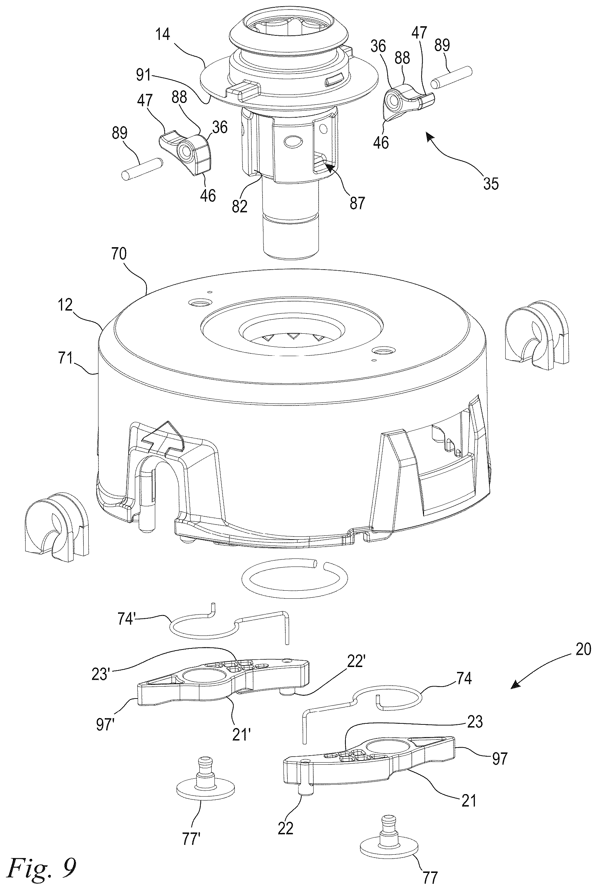

Wie in Fig. 9 gezeigt, umfasst die Stelleinrichtung 20 mindestens eine Klinke 21. Die mindestens eine Klinke 21 ist in Richtung der Drehachse 4 des Schneidkopfes 10 feststehend zum Gehäuse 11 des Schneidkopfes 10 angeordnet. Die Klinke 21 ist vorzugsweise unmittelbar an dem Gehäuseoberteil 12 des Gehäuses 11 angeordnet. Die mindestens eine Klinke 21 ist insbesondere am Boden 70 des Gehäuseoberteils 12 angeordnet.

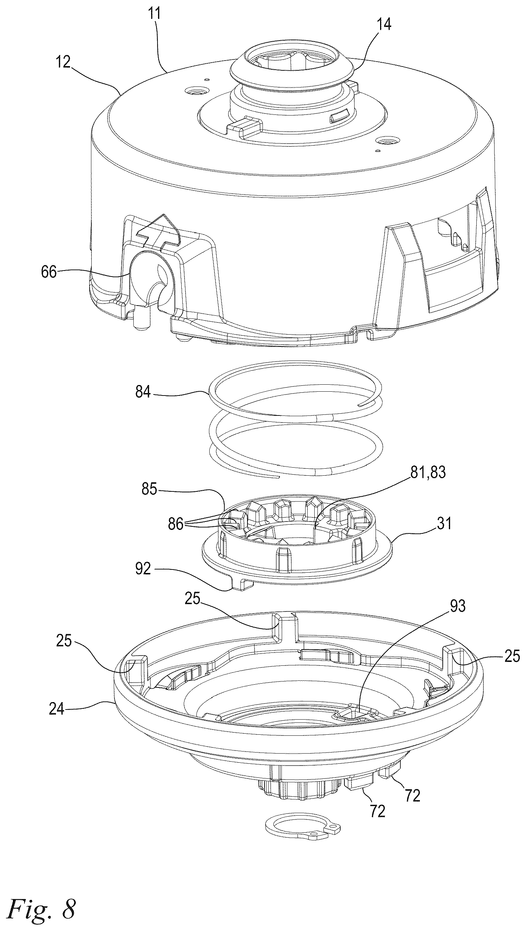

Ferner umfasst die Stelleinrichtung 20 ein Stellelement 24, wie in Figur 8 gezeigt. Das Stellelement 24 ist bezogen auf die Drehachse 4 des Schneidkopfes 10 drehfest mit der Fadenspule 16 verbunden. Die drehfeste Verbindung zwischen Stellelement 24 und der Fadenspule 16 ist in der vorliegenden Ausführung als eine formschlüssige Verbindung ausgebildet. Hierfür sind an dem Stellelement 24 mehrere Zapfen 72 ausgebildet (Figuren 5 und 8), die in entsprechende Öffnungen 73 der Fadenspule 16 greifen. Das erste Federelement 65 drückt die Fadenspule 16 gegen das Stellelement 24, wodurch die Zapfen 72 des Stellelementes 24 in Richtung der Drehachse 4 des Schneidkopfes 10 in die Öffnungen 73 der Fadenspule 16 gleiten. Das Stellelement 24 ist entgegen der Federkraft des ersten Federelementes 65 an einer Wellenschulter 91 der Wellenaufnahme 14 in Richtung der Drehachse 4 des Schneidkopfes 10 abgestützt. Die Zapfen 72 des Stellelementes 24 und die Öffnungen 73 der Fadenspule 16 sind jeweils an gegenüberliegenden Seiten von Stellelement 24 und Fadenspule 16 ausgebildet. Somit wird eine drehsichere Verbindung zwischen Stellelement 24 und Fadenspule 16 sichergestellt. In einer alternativen Ausführung kann die drehsichere Verbindung zwischen Stellelement 24 und Fadenspule 16 auch durch eine andere Verbindungsart hergestellt werden.

Wie in Figur 8 gezeigt, umfasst das Stellelement 24 mindestens einen Klinkenanschlag 25. Die mindestens eine Klinke 21 ist mit dem mindestens einen Klinkenanschlag 25 wirkverbunden. Die mindestens eine Klinke 21 und der mindestens eine Klinkenanschlag 25 sind derart ausgebildet und zueinander angeordnet, dass in Abhängigkeit der Fliehkraft die Relativdrehung zwischen der Fadenspule 16 und dem Gehäuse 11 durch das Zusammenspiel von der mindestens einen Klinke 21 und dem mindestens einen Klinkenanschlag 25 freigegeben oder gesperrt wird (Figuren 10 bis 16). Ist die Relativdrehung zwischen der Fadenspule 16 und dem Gehäuse 11 freigegeben, wird Schneidfaden dem freien Schneidfadenabschnitt 59 nachgeführt. Ist die Relativdrehung zwischen der Fadenspule 16 und dem Gehäuse 11 gesperrt, wird dem freien Schneidfadenabschnitt 59 kein Schneidfaden nachgeführt.

Wie in Fig. 9 gezeigt, umfasst die Stelleinrichtung 20 ein zweites Federelement 74. Das zweite Federelement 74 spannt die mindestens eine Klinke 21 in eine Sperrstellung 75 vor, in der die mindestens eine Klinke 21 gegen den Klinkenanschlag 25 wirkt und die Relativdrehung zwischen der Fadenspule 16 und dem Gehäuse 11 sperrt. Das zweite Federelement 74 stützt sich mit seinem einen Ende am Gehäuse 11 ab und greift mit seinem anderen Ende an der mindestens einen Klinke 21 ein. Die mindestens eine Klinke 21 ist insbesondere auf einem Lagerzapfen 77 schwenkbar gegenüber dem Gehäuse 11 gelagert. Der Lagerzapfen 77 ist an dem Gehäuse 11, insbesondere am Gehäuseoberteil 12, ganz insbesondere an dem Boden 70 des Gehäuseoberteils 12 befestigt. Die Drehbewegung der mindestens einen Klinke 21 ist in einer Radialebene der Drehachse 4 des Schneidkopfes 11 möglich. Die Radialebene ist senkrecht zur Drehachse 4 des Schneidkopfes 11 ausgerichtet. Ferner umfasst die mindestens eine Klinke 21 ein Betätigungsgewicht 23. Das Betätigungsgewicht 23 bewirkt in Abhängigkeit der Fliehkraft ein entsprechendes Drehmoment, welches der Federkraft des zweiten Federelementes 74 entgegenwirkt. Bei Reduzierung der Länge des freien Schneidfadenabschnittes 59, beispielsweise durch Abnutzung des Schneidfadens während des Betriebes des Schneidkopfes 10, reduzieren sich auch die Fliehkräfte, die an dem Schneidfaden wirken. Folglich reduziert sich auch das auf die Fadenspule 16 wirkende Drehmoment, welches den mindestens einen Klinkenanschlag 25, der mit der Fadenspule 16 drehfest verbunden ist, gegen die mindestens eine Klinke 21 spannt. Das Betätigungsgewicht 23 der mindestens einen Klinke 21, das zweite Federelement 74 und die Länge des freien Schneidfadenabschnittes 59 sind derart aufeinander abgestimmt, dass bei der Unterschreitung einer vorbestimmten Mindestlänge des freien Schneidfadenabschnittes 59 die mindestens eine Klinke 21 dem mindestens einen Klinkenanschlag 23 ausweicht und eine Relativdrehung der Fadenspule 16 und des Gehäuses 11 zulässt. Die Stelleinrichtung 20 befindet sich in einer Nachführstellung 76, in der dem freien Schneidfadenabschnitt 59 Schneidfaden nachgeführt wird. Schlägt die mindestens eine Klinke 21 wieder an dem mindestens einen Klinkenanschlag 25 an, befindet sich die Stelleinrichtung 20 wieder in der Sperrstellung 75. Der Nachstellvorgang ist zu den Figuren 10 bis 16 detailliert beschrieben.

Im vorliegenden Ausführungsbeispiel umfasst der Schneidkopf 10 zwei Klinken 21, 21'. Auch eine andere Anzahl an Klinken 21, 21' kann zweckmäßig sein.

Wie insbesondere in den Figuren 6 und 7 gezeigt, umfasst der Schneidkopf 10 eine Kupplungseinrichtung 30. Die Kupplungseinrichtung 30 weist eine Betriebsstellung 38 und eine Wickelstellung 39 auf. Die Kupplungseinrichtung 30 kann zwischen der Betriebsstellung 38 und der Wickelstellung 39 geschaltet werden. In der Betriebsstellung 39 der Kupplungseinrichtung 30 sind das Griffelement 40 und das Gehäuse 11 durch die Kupplungseinrichtung 30 bezüglich der Drehachse 4 des Schneidkopfes 11 drehfest miteinander verbunden. In der Wickelstellung 39 der Kupplungseinrichtung 30 sind das Griffelement 40 und das Gehäuse 11 bezüglich der Drehachse 4 des Schneidkopfes 10 relativ zueinander drehbar. Zudem sind in der Wickelstellung 39 der Kupplungseinrichtung 30 das Griffelement 40 und die Fadenspule 16 durch die Kupplungseinrichtung 30 drehfest verbunden. Der Bediener kann also in der Wickelstellung 39 der Kupplungseinrichtung 30 über das Griffelement 40 die Fadenspule 16 relativ zum Gehäuse 11 drehen und somit den Schneidfaden auf die Fadenspule 16 aufwickeln.

Wie in den Figuren 6 und 7 gezeigt, weist die Kupplungseinrichtung 30 ein Verbindungselement 31 und eine Schalteinheit 35 auf. Das Verbindungselement 31 und die Schalteinheit 35 sind dazu ausgebildet, eine drehfeste Verbindung des Gehäuses 11 und des Griffelementes 40 wahlweise herzustellen. Das Verbindungselement 31 wird durch die Schalteinheit 35 in die Wickelstellung 39 und in die Betriebsstellung 38 geschaltet. Das Verbindungselement 31 ist bezogen auf die Drehachse 4 des Schneidkopfes 10 drehsicher mit der Wellenaufnahme 14 verbunden. Das Verbindungselement 31 ist in Richtung der Drehachse 4 des Schneidkopfes 10 gegenüber der Wellenaufnahme 14 bewegbar. Das Verbindungselement 31 ist in Richtung der Drehachse 4 des Schneidkopfes 10 an der Wellenaufnahme 14 linear gelagert. Das Verbindungselement 31 ist als ein Verbindungsring ausgebildet, der die Wellenaufnahme 14 umgibt. Der Verbindungsring ist koaxial zur Wellenaufnahme 14 angeordnet. Wie in den Figuren 8 und 9 gezeigt, ist das Verbindungselement 31 auf der Wellenaufnahme 14 über eine Keilwellenverbindung 81 drehsicher gehalten. Die Keilwellenverbindung 81 umfasst mindestens eine Nut 82 und mindestens einen in der Nut 82 geführten Mitnehmer 83. In der vorliegenden Ausführung ist die Nut 82 an der Wellenaufnahme 14 ausgebildet. Der Mitnehmer 83 ist an dem Verbindungselement 31 ausgebildet. In der vorliegenden Ausführung sind zwei Nuten 82 an der Wellenaufnahme 14 sowie zwei Mitnehmer 83 an dem Verbindungselement 31 vorgesehen. Auch eine andere Anzahl an Nuten 82 und mit den Nuten 82 korrespondierende Mitnehmer 83 kann zweckmäßig sein. Ferner umfasst der Schneidkopf 10 ein drittes Federelement 84, das vorliegend als Schraubenfeder ausgebildet ist. Das dritte Federelement 84 wirkt auf das Verbindungselement 31 und spannt dieses in die Wickelstellung 39 vor. Das dritte Federelement 84 ist an dem Gehäuse 11 insbesondere an dem Gehäuseoberteil 12, insbesondere an dem Boden 70 des Gehäuseoberteils 12 abgestützt.

Wie in Fig. 8 gezeigt, weist das Verbindungselement 31 eine dem Boden 70 des Gehäuseoberteils 12 zugewandte Oberseite 85 auf. An der Oberseite 85 des Verbindungselementes 31 ist eine Stirnzahnung 86 ausgebildet. In der Betriebsstellung 38 der Kupplungseinrichtung 30 ist das Verbindungselement 31 entgegen der Federkraft des dritten Federelementes 84 gegen den Boden 70 des Gehäuseoberteils 12 gedrückt, wobei die Stirnzahnung 86 des Verbindungselements 31 mit einer Gegenzahnung des Gehäuseoberteils 12 eine formschlüssige Verbindung herstellt. Die vorliegende formschlüssige Verbindung ist als Stirnzahnverbindung ausgebildet. In einer alternativen Ausführung des Schneidkopfes 10 können auch andere Verbindungsformen zwischen dem Gehäuse 11 und dem Verbindungselement 31 zweckmäßig sein. Durch die formschlüssige Verbindung in der Betriebsstellung 38 der Kupplungseinrichtung 30 sind das Gehäuse 11 und das Verbindungselement 31 bezogen auf die Drehachse 4 des Schneidkopfes 10 drehfest miteinander verbunden. Da die Wellenaufnahme 14 mit dem Verbindungselement 31 und das Griffelement 40 mit der Wellenaufnahme 14 drehfest verbunden sind, ist das Gehäuse 11 in der Betriebsstellung 38 der Kupplungseinrichtung 30 drehfest mit dem Verbindungselement 31, der Wellenaufnahme 14 und dem Griffelement 40 drehfest gekoppelt. In der Wickelstellung 39 der Kupplungseinrichtung 30 sind Stirnzahnung des Verbindungselementes 31 und Gegenzahnung des Gehäuses 11 nicht im Eingriff. Die formschlüssige Verbindung zwischen dem Verbindungselement 31 und dem Gehäuse 11 ist aufgehoben. Somit ist das Gehäuse 11 auch nicht mehr mit der Wellenaufnahme 14 und dem Griffelement 40 drehfest gekoppelt.

Wie insbesondere in den Figuren 6 und 9 gezeigt, umfasst die Schalteinheit 35 mindestens ein Schaltelement 36. In der vorliegenden Ausführung des Schneidkopfes 10 sind zwei Schaltelemente 36 vorgesehen. Auch eine andere Anzahl an Schaltelementen 36 kann zweckmäßig sein. Das mindestens eine Schaltelement 36 umfasst ein erstes Ende 46 und ein zweites Ende 47. Das erste Ende 46 des Schaltelementes 36 ragt in der Wickelstellung 39 der Kupplungseinrichtung 30 in den Aufnahmeraum 15 der Wellenaufnahme 14. Das erste Ende 46 des Schaltelementes 36 ragt in der Wickelstellung 39 der Kupplungseinrichtung 30 derart in den Aufnahmeraum 15, dass das erste Ende 46 beim Einführen der Abtriebswelle 3 durch die Abtriebswelle 3 kontaktiert wird. Ist die Abtriebswelle 3 vollständig in den Aufnahmeraum 15 der Wellenaufnahme 14 eingeschoben (Fig. 7), ist das erste Ende 46 des Schaltelementes 36 aus dem Aufnahmeraum 15 geschoben. Das zweite Ende 47 des Schaltelementes 36 ist mit dem Verbindungselement 31 wirkverbunden. Das zweite Ende 47 des Schaltelementes 36 drückt entgegen der Federkraft des dritten Federelementes 84 das Verbindungselement 31 gegen den Boden 70 des Gehäuseoberteils 12. Das zweite Ende 47 des Schaltelementes 36 kontaktiert das Verbindungselement 31 vorzugsweise unmittelbar. Das zweite Ende 47 des Schaltelementes 36 kontaktiert das Verbindungselement 31 vorzugsweise an einer dem Gehäuseunterteil 13 zugewandten Unterseite 90 des Verbindungselementes 31. Die Kupplungseinrichtung 30 ist von der Wickelstellung 39 in die Betriebsstellung 38 geschaltet. Das Schaltelement 36 ist in der bevorzugten Ausführungsform als ein Schwenkhebel 88 ausgebildet. Der Schwenkhebel 88 ist in der Wellenaufnahme 14 angeordnet. Die Wellenaufnahme 14 weist hierfür mindestens eine Halteöffnung 87 auf, die durch die Umfangswand der Wellenaufnahme 14 verläuft. Der Schwenkhebel 88 ist in der Halteöffnung 87 angeordnet. Der Schwenkhebel 88 ist über einen Stift 89 schwenkbar in der Halteöffnung 87 gelagert.

Wird der Schneidkopf 10 wieder von der Abtriebswelle 3 abgezogen, wird das Verbindungselement 31 durch die Federkraft des dritten Federelementes 84 vom Boden 70 des Gehäuseoberteils 12 weggedrückt, wodurch das erste Ende 46 des Schaltelementes 36 zurück in den Aufnahmeraum 15 der Wellenaufnahme14 bewegt, insbesondere geschwenkt wird. Die Kupplungseinrichtung 30 ist von der Betriebsstellung 38 zurück in die Wickelstellung 39 (Fig. 6) geschaltet.

Wie in Fig. 6 gezeigt, kontaktieren sich das Verbindungselement 31 und das Stellelement 24 in der Wickelstellung 39 der Kupplungsvorrichtung 30. In der Wickelstellung 39 der Kupplungsvorrichtung 30 sind das Verbindungselement 31 und das Stellelement 24 bezogen auf die Drehachse 4 des Schneidkopfes 10 drehsicher, insbesondere formschlüssig, miteinander verbunden. Die formschlüssige Verbindung zwischen dem Verbindungselement 31 und dem Stellelement 24 umfasst einen am Verbindungselement 31 ausgebildeten Zapfen 92 (Fig. 8), der in eine mit dem Zapfen 92 korrespondierende Öffnung 93 des Stellelementes 24 greift. In der Wickelstellung 39 der Kupplungsvorrichtung 30 sind das Griffelement 40 über die Wellenaufnahme 14, das Stellelement 24 und das Verbindungselement 31 mit der Fadenspule 16 bezogen auf die Drehachse 4 des Schneidkopfes 10 drehsicher verbunden.

Wie in Fig. 7 gezeigt, kontaktieren sich das Verbindungselement 31 und das Stellelement 24 in der Betriebsstellung 38 der Kupplungsvorrichtung 30 nicht. Die drehsichere Verbindung zwischen Verbindungselement 31 und dem Stellelement 24 ist in der Betriebsstellung 38 der Kupplungsvorrichtung 30 aufgehoben. Das Verbindungselement 31 ist durch das Schaltelement 36 gegen das Gehäuseoberteil 12 gedrückt, wodurch der Zapfen 92 des Verbindungselementes 31 aus der Öffnung 93 des Stellelementes 24 geschoben ist. In der Betriebsstellung 38 der Kupplungseinrichtung 30 sind das Stellelement 24 mit der Fadenspule 16 gegenüber dem Verbindungselement 31, der Wellenaufnahme 14 sowie dem Griffelement 40 drehbar.

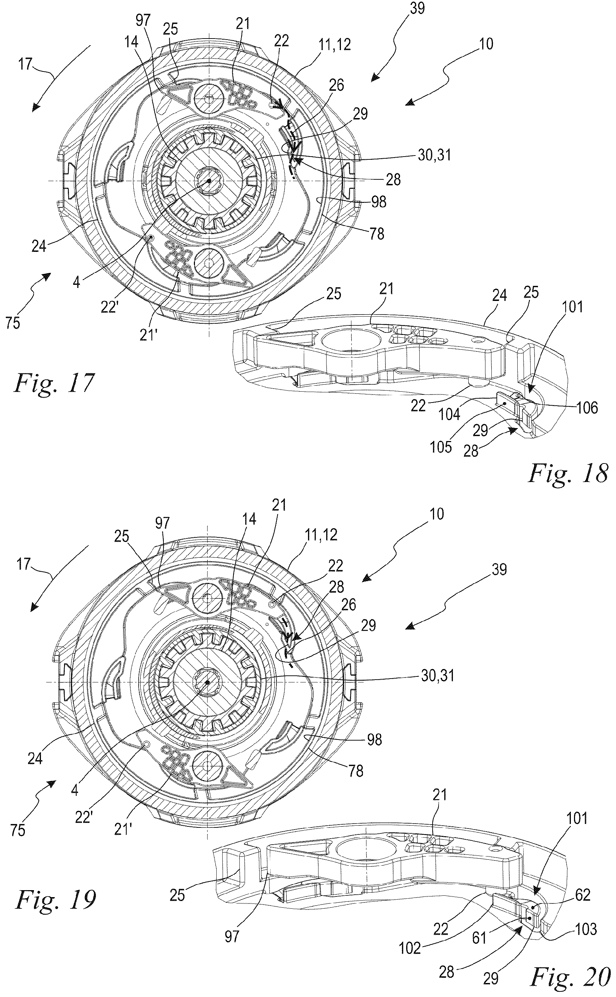

Der erfindungsgemäße Schneidkopf 10 umfasst zwei Funktionen. Die erste Funktion besteht in einer automatischen Fadennachstellung im Betrieb des Schneidkopfes. In Abhängigkeit der auf den Schneidkopf 10 wirkenden Fliehkraft wird die Stelleinrichtung betätigt, die dem freien Schneidfadenabschnitt 59 auf der Fadenspule 16 den aufgewickelten Schneidfaden zuführt. Die zweite Funktion des erfindungsgemäßen Schneidkopfes 10 besteht darin, ein komfortables Aufwickeln des Schneidfadens auf die Fadenspule 16 in montiertem Zustand des Schneidkopfes 10 zu ermöglichen. Der Schneidkopf 10 befindet sich in montiertem Zustand, wenn die einzelnen Bauelemente des Schneidkopfes 10 zusammengesetzt sind. Zum Abwickeln und zum Aufwickeln des Schneidfadens von respektive auf die Fadenspule 16 sind Relativdrehungen der Fadenspule 16 gegenüber dem Gehäuse 11 in entgegengesetzte Relativdrehrichtungen erforderlich. Zum besseren Verständnis der Erfindung sind anhand der Figuren 10 bis 16 das automatische Nachführen des Schneidfadens, also das Abwickeln des Schneidfadens von der Fadenspule 16, und anhand der Figuren 17 bis 24 das Aufwickeln des Schneidfades auf die Fadenspule 16 erläutert.

Die Figuren 10 bis 16 zeigen Schnittbilder des Schneidkopfes 10 in einer Ansicht von oben nach unten, also vom Gehäuseoberteil 12 zum Gehäuseunterteil 13 hin, in verschiedenen Stellungen während des Nachführens des Schneidfadens. In diesen verschiedenen Stellungen befindet sich der Schneidkopf 10 in Betrieb, d.h. der Schneidkopf 10 ist an einer Abtriebswelle 3 eines Arbeitsgerätes 1, insbesondere an einem Freischneider, befestigt, die wiederum den Schneidkopf 10 in Drehrichtung 17 antreibt. Die Abtriebswelle 3 ist im Aufnahmeraum 15 der Wellenaufnahme 14 angeordnet. Dadurch ist die Kupplungseinrichtung 30, insbesondere die Schalteinheit 35, in die Betriebsstellung 38 betätigt, so dass das Verbindungselement 31 die Abtriebswelle 3 über die Wellenaufnahme 14 mit dem Gehäuse 11 drehsicher bezogen auf die Drehachse 4 des Schneidkopfes 10 verbindet. Das Verbindungselement 31 ist von dem Stellelement 24 und damit von der Fadenspule 16 entkoppelt.

Wie insbesondere in Fig. 10 gezeigt, befindet sich die Stelleinrichtung 20 in der Sperrstellung 75, in der die Stelleinrichtung 20 das Gehäuse 11 mit der Fadenspule 16 bezogen auf die Drehachse 4 des Schneidkopfes 10 drehsicher verbindet. Die mindestens eine Klinke 21 kontaktiert den Klinkenanschlag 25 des Stellelementes 24, wodurch die Fadenspule 16 durch das Stellelement 24 und durch das Gehäuse 11 in Drehrichtung 17 mitgedreht wird. Das Gehäuse 11 und die Fadenspule 16 drehen sich in Drehrichtung 17 mit gleicher Drehgeschwindigkeit.

Wie in Fig. 10 gezeigt, umfasst das Stellelement 24 mindestens einen Klinkenanschlag 25. Der Klinkenanschlag 25 ist durch einen Vorsprung an einem umlaufenden Kragen 78 des Stellelementes 24 gebildet. Der umlaufende Kragen 78 umgibt die Drehachse 4 des Schneidkopfes 10 vollständig. Der umlaufende Kragen 78 erstreckt sich in Richtung der Drehachse 4 des Schneidkopfes 10. Der Klinkenanschlag 25 erstreckt sich ausgehend vom Kragen 78 radial zur Drehachse 4 des Schneidkopfes 10 hin. Der Klinkenanschlag 25 weist eine Anschlagsfläche 79 auf, an der die Klinke 21 in Sperrstellung 75 der Stelleinrichtung 20 anliegt. Die Anschlagsfläche 79 spannt eine Anschlagsebene 80 auf, die das Stellelement 24 an einem Außenumfang 94 in einer Schnittlinie 95 schneidet. Ferner liegt an der Schnittlinie 95 an dem Außenumfang 94 des Stellelementes 24 eine Tangentialebene 96 an. Die Tangentialebene 96 schneidet die Anschlagsebene 80 in einem Winkel α, wobei der Winkel α zur Drehrichtung 17 hin geöffnet ist. Die Anschlagsfläche 79 des Klinkenanschlages 25 ist derart ausgebildet, dass der Winkel α im Ausführungsbeispiel kleiner 90°, insbesondere kleiner 80°, insbesondere kleiner 75° ist. Die Anschlagsfläche 79 grenzt an die Innenfläche 98 des umlaufenden Kragens 78 des Stellelementes 24 an. Der Klinkenanschlag 25 ist dabei so an dem umlaufenden Kragen 78 angeformt, dass diese eine keilförmige Aufnahme für die Klinke 21 bilden. Die Klinke 21 selbst weist eine keilförmige Spitze 97 auf, die in der Sperrstellung 75 an der Anschlagsfläche 79 des Klinkenanschlages 25 anliegt. Die keilförmige Spitze 97 der Klinke 21 liegt in der durch den Klinkenanschlag 25 und dem umlaufenden Kragen 78 gebildeten Aufnahme an. Durch die keilförmige Aufnahme des Stellelementes 24 ist ein sicherer Halt der Spitze 97 der Klinke 21 an dem Stellelement 24 in Sperrstellung 75 sichergestellt.

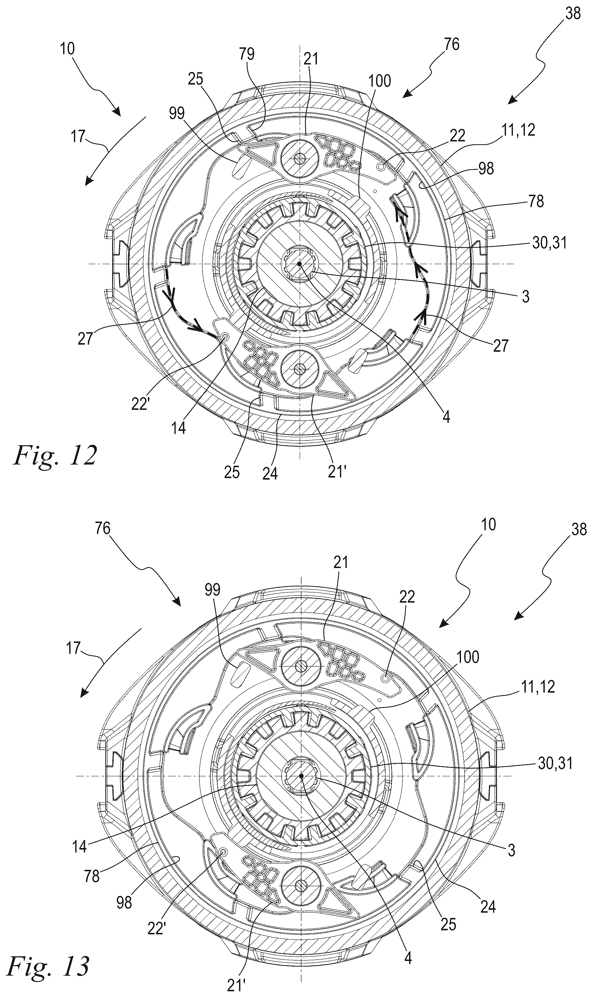

In Fig. 11 ist der Schneidkopf 10 in einem Zustand gezeigt, indem die Stelleinrichtung 20 von der Sperrstellung 75 in die Nachführstellung 76 übergeht. Die Mindestlänge des freien Schneidfadenabschnittes 59 ist unterschritten. Somit reduziert sich die an dem Schneidfaden wirkende Fliehkraft, wodurch sich auch das an der Fadenspule 16 anliegende Drehmoment reduziert, das den Klinkenanschlag 25 des Stellelementes 24 gegen die Klinke 21 drückt. Das Betätigungsgewicht 23 der Klinke 21 bewirkt ein Drehmoment an der Klinke 21, welches die Federkraft des zweiten Federelementes 74 sowie das an der Fadenspule 16 anliegende Drehmoment überwindet. Dadurch wird die Klinke 21 mit ihrer keilförmigen Spitze 97 aus dem Klinkenanschlag 25 des Stellelementes 24 herausgeschwenkt. Dabei drückt die Klinke 21 das Stellelement 24 relativ zum Gehäuse 11 in Drehrichtung 17. Die Spitze 97 der Klinke 21 schwenkt in Richtung zur Drehachse 4 des Schneidkopfes 10 hin, bis diese dem Klinkenanschlag 25 ausweicht (Fig. 12).

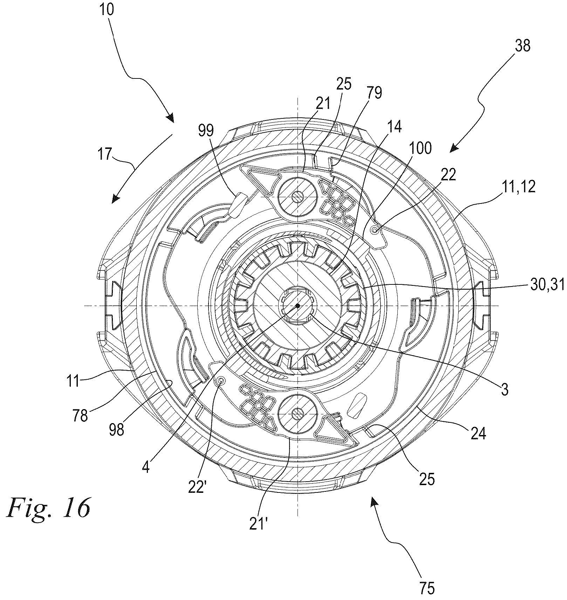

Wie in Fig. 12 gezeigt, befindet sich die Stelleinrichtung 20 in der Nachführstellung 76. Der Klinkenanschlag 25 liegt mit seiner Anschlagsfläche 79 nicht mehr an der Klinke 21, insbesondere an der Spitze 97 der Klinke 21, an. Die Klinke 21 ist dem Klinkenanschlag 25 ausgewichen. In der Nachführstellung 76 sind das Gehäuse 11 und das Stellelement 24, insbesondere die Fadenspule 16 über das Stellelement 24, nicht mehr drehsicher miteinander verbunden. Während das Gehäuse 11 weiter drehend um die Drehachse 4 des Schneidkopfes 10 durch die Abtriebswelle 3 angetrieben wird, dreht sich das Stellelement 24 mit der Fadenspule 16 relativ zum Gehäuse 11 entgegen der Drehrichtung 17 des Schneidkopfes 10 (Figuren 12 bis 15). Dabei wird Schneidfaden von der Fadenspule 16 abgewickelt, wodurch sich der freie Schneidfadenabschnitt 59 längt. Die Stelleinrichtung 20 befindet sich in der Nachführstellung 76. Die Relativdrehung zwischen dem Gehäuse 11 und dem Stellelement 24 mit der Fadenspule 16 erfolgt so lange, bis der mindestens eine Klinkenanschlag 25 an der Klinke 21 anstößt, wodurch das Gehäuse 11 und das Stellelement 24 mit der Fadenspule 16 wieder drehsicher miteinander verbunden sind (Fig. 16). Die Stelleinrichtung 20 befindet sich dann wieder in der Sperrstellung 75.

Wie in den Figuren 10 bis 16 gezeigt, umfasst das Stellelement 24 mehrere Klinkenanschläge 25. In der bevorzugten Ausführung des Schneidkopfes 10 umfasst das Stellelement 24 fünf Klinkenanschläge 25. Auch eine andere Anzahl an Klinkenanschlägen 25 kann zweckmäßig sein. Die mehreren Klinkenanschläge 25 sind im Ausführungsbeispiel um die Drehachse 4 des Schneidkopfes 10 in gleichmäßigen Winkelabständen an dem Stellelement 24 angeordnet. Um ein Überspringen eines Klinkenanschlages 25 an einer Klinke 21 vorbei zu vermeiden, ist die mindestens eine Klinke 21 zumindest teilweise auf einer Nachstellkontur 27 des Stellelementes 24 zwangsgeführt. Die Nachstellkontur 27 ist in Figur 12 durch eine gestrichelte Linie dargestellt.

Wie in Fig. 9 gezeigt, umfasst die mindestens eine Klinke 21 ein Führungselement 22. Das Führungselement 22 ist feststehend mit der Klinke 21 ausgebildet. Das Führungselement 22 ist vorzugsweise einteilig mit der Klinke 21 ausgebildet. Das Führungselement 22 ist in der vorliegenden Ausführung als ein Zapfen ausgebildet. Auch andere Bauformen des Führungselementes 22 können zweckmäßig sein. Das Führungselement 22 ist an dem der Spitze 97 der Klinke 21 gegenüberliegenden Ende der Klinke 21 angeordnet. Das Führungselement 22 der Klinke 21 ist dazu ausgebildet, mit einer Kontur 26, 27 des Stellelementes 24 zu korrespondieren.

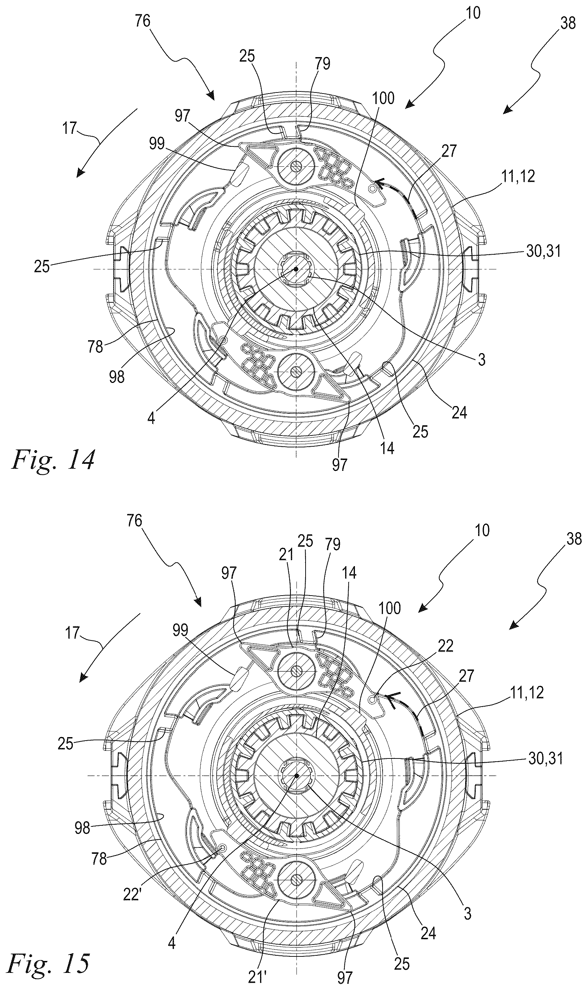

Wie in den Figuren 10 bis 16 gezeigt, ragt das Führungselement 22 in Richtung der Drehachse 4 des Schneidkopfes 10 zum Stellelement 24 hin und kontaktiert zumindest teilweise radial die auf dem Stellelement 24 ausgebildete Nachstellkontur 27. Die Nachstellkontur 27 ist derart ausgebildet, dass nachdem die Spitze 97 der Klinke 21 einem Klinkenanschlag 25 ausgewichen ist, die Klinke 21 so geschwenkt wird, dass sich die Spitze 97 nach außen, insbesondere zur Innenfläche 98 des Kragens 78 des Stellelementes 24 hin, dreht. Insbesondere in den Figuren 14 und 15 ist gezeigt, wie das Führungselement 22 der Klinke 21 während der Relativdrehung von Stellelement 24 und dem Gehäuse 11 über die Nachstellkontur 27 zur Drehachse 4 des Schneidkopfes 10 hin bewegt wird. Dadurch wird die Spitze 97 der Klinke 21 nach außen weg von der Drehachse 4 des Schneidkopfes 10 geschwenkt. Die Spitze 97 befindet sich dann wieder in einer Position, in der der Klinkenanschlag 25 bei weiterer Relativdrehung zwischen dem Stellelement 24 und dem Gehäuse 11 gegen die Spitze 97 der Klinke 21 stößt, so dass die Stelleinrichtung 20 wieder die Sperrstellung 75 einnimmt.

Wie in den Figuren 10 bis 16 gezeigt, umfasst der Schneidkopf 10 einen ersten Schwenkanschlag 99, um die Schwenkbewegung der Klinke 21 in eine erste Schwenkrichtung zu begrenzen. Der Schneidkopf 10 umfasst einen zweiten Schwenkanschlag 100, um die Schwenkbewegung der Klinke 21 in eine der ersten Schwenkrichtung entgegengesetzte Schwenkrichtung zu begrenzen. Der erste Schwenkanschlag 99 und/oder der zweite Schwenkanschlag 100 sind an dem Gehäuse 11, insbesondere dem Gehäuseoberteil 12, ausgebildet. Der erste Schwenkanschlag 99 begrenzt die Schwenkrichtung der Spitze 97 der Klinke 21 zur Drehachse 4 des Schneidkopfes 10 hin. Der erste Schwenkanschlag 99 ist zum Kontakt mit dem Ende der Klinke 21 vorgesehen, an dem die Spitze 97 der Klinke 21 ausgebildet ist. Der zweite Schwenkanschlag 100 begrenzt die Schwenkrichtung des anderen Endes der Klinke 21 zur Drehachse 4 des Schneidkopfes 10 hin, an welchem das Führungselement 22 angeordnet ist. Der zweite Schwenkanschlag 100 ist zum Kontakt mit dem anderen Ende der Klinke 21 vorgesehen, an dem das Führungselement 22 der Klinke 21 ausgebildet ist. Die Schwenkanschläge 99, 100 sind derart am Gehäuse 11, insbesondere am Gehäuseoberteil 12, ausgebildet, dass die Schwenkbewegung der Klinke 21 möglichst gering ist.

Wie in den Figuren 10 bis 16 gezeigt, umfasst die Stelleinrichtung 20 in der bevorzugten Ausführung des Schneidkopfes 10 mehrere, insbesondere zwei Klinken 21, 21'. Die Klinken 21, 21' sind bevorzugt baugleich ausgebildet. Ferner umfasst die Stelleinrichtung 20, insbesondere das Stellelement 22, fünf Klinkenanschläge 25. Erfindungsgemäß ist die Anzahl der Klinkenanschläge 25 ungleich der Anzahl der Klinken 21, 21' und ungleich einem Vielfachen der Anzahl der Klinken 21, 21'. Darüber ist erfindungsgemäß vorgesehen, dass die mehreren Klinken 21, 21' wechselseitig mit den Klinkenanschlägen 25 im Eingriff sind, d.h. die mehreren Klinken 21, 21' sind nicht gleichzeitig im Eingriff mit Klinkenanschlägen 25. Während in den Figuren 10 und 11 die eine Klinke 21 im Eingriff mit einem Klinkenanschlag 25 ist, ist die andere Klinke 21' mit keinem Klinkenanschlag 25 im Eingriff. Erst nach erfolgter Relativdrehung zwischen Stellelement 24 und Gehäuse 11 ist die andere Klinke 21' mit einem Klinkenanschlag 25 im Eingriff, während die eine Klinke 21 keinen Klinkenanschlag 25 kontaktiert. Durch den wechselseitigen Eingriff der mehreren Klinken 21, 21' kann die Länge, um die der freie Schneidfadenabschnitt 59 verlängert werden soll, verkürzt werden. Das Nachstellen des Schneidfadens unterliegt einer deutlich feineren Nachstellrasterung. Somit kann die Länge des freien Schneidfadenabschnittes 59 möglichst konstant gehalten werden. Da der Schneidfaden üblicherweise im Bereich des freien Schneidfadenabschnittes 59 durch ein am Arbeitsgerät 1 ausgebildetes Messer abgelängt wird, kann durch das feinere Nachstellraster Schneidfaden eingespart werden.

Die Figuren 17 bis 24 stellen den Aufwickelvorgang des Schneidfadens auf die Fadenspule 16 dar, wobei der Schneidkopf 10 auf keiner Abtriebswelle 3 angeordnet ist. Die Kupplungseinrichtung 30 befindet sich in der Wickelstellung 39, demnach das Griffelement 40 über das Verbindungselement 31 mit dem Stellelement 24 und der Fadenspule 16 drehsicher verbunden ist. Der Bediener kann also über das Griffelement 40 die im Gehäuse 11 angeordnete Fadenspule 16, die dem Bediener nicht zugänglich ist, relativ zum Gehäuse 11 drehen. Die Stelleinrichtung 20 befindet sich in der Sperrstellung 75. Das Stellelement 24 kann somit nicht entgegen der Drehrichtung 17, also in Gegendrehrichtung 18, relativ zum Gehäuse 11 gedreht werden. Der mindestens eine Klinkenanschlag 25 des Stellelementes 24 wird durch die mindestens eine Klinke 21 in Gegendrehrichtung 18 blockiert. Damit ist auch eine Relativdrehung des Griffelementes 40, des Verbindungselementes 31, sowie der Fadenspule 16 in Gegendrehrichtung 18 gegenüber dem Gehäuse 11 unterbunden. In Drehrichtung 17 hingegen ist eine Relativdrehung des Stellelementes 24 gegenüber dem Gehäuse 11 möglich.

Wie in den Figuren 17 bis 24 gezeigt, umfasst das Stellelement 24 eine Wickelkontur 26. Die Wickelkontur 26 ist von der Nachstellkontur 27 verschieden. Die Wickelkontur 26 ist derart ausgebildet, dass bei einer Relativdrehung des Stellelementes 24 gegenüber dem Gehäuse 11 in Drehrichtung 17 sich das Führungselement 22 auf der Wickelkontur 26 entlangbewegt, insbesondere entlanggleitet. Ein Verhaken des Führungselementes 22, insbesondere an der Nachstellkontur 27, sowie eine damit verbundene Blockierung des Stellelementes 24 in Drehrichtung 17 soll damit vermieden werden.

Das Führungselement 22 der mindestens einen Klinke 21 wechselwirkt in Abhängigkeit davon, ob das Stellelement 24 relativ zum Gehäuse 11 in Drehrichtung 17 oder in Gegendrehrichtung 18 gedreht wird, mit der Wickelkontur 26 oder der Nachstellkontur 27. Wird das Stellelement 24 relativ zum Gehäuse 11 in Drehrichtung 17 gedreht, so bewegt sich das Führungselement 22 der mindestens einen Klinke 21 entlang der Wickelkontur 26. Wird das Stellelement 24 relativ zum Gehäuse 11 in Gegendrehrichtung 18 gedreht, so bewegt sich das Führungselement 22 der mindestens einen Klinke 21 entlang der Nachstellkontur 27.

Die Wickelkontur 26 und die Nachstellkontur 27 sind, wie beispielsweise in Fig. 18 gezeigt, bezogen auf die Richtung der Drehachse 4 des Schneidkopfes 10 in selber Ebene angeordnet. In anderen Worten liegen die Wickelkontur 26 und die Nachstellkontur 27 bezogen auf die Drehachse 4 des Schneidkopfes 10 auf gleicher Höhe.

Wie in den Figuren 17 bis 24 gezeigt, weist das Stellelement 24 einen Kreuzungsabschnitt 28 auf. In dem Kreuzungsabschnitt 28 kreuzen sich die Wickelkontur 26 und die Nachstellkontur 27. Ferner ist an dem Stellelement 24 ein Sperrelement 29 vorgesehen. Das Sperrelement 29 ist im Kreuzungsabschnitt 28 angeordnet. Das Sperrelement 29 gibt drehrichtungsabhängig die Wickelkontur 26 oder die Nachstellkontur 27 für das Führungselement 22 frei. Wird das Stellelement 24 relativ zum Gehäuse 11 in Drehrichtung 17 gedreht, so gibt das Sperrelement 29 die Wickelkontur 26 frei, wodurch sich das Führungselement 22 im Kreuzungsabschnitt 28 entlang der Wickelkontur 26 bewegt. Wird das Stellelement 24 relativ zum Gehäuse 11 in Gegendrehrichtung 18 gedreht, so blockiert das Sperrelement 29 die Wickelkontur 26 und gibt zugleich die Nachstellkontur 27 frei. Folglich bewegt sich das Führungselement 22 im Kreuzungsabschnitt 28 entlang der Wickelkontur 26. Durch den Kreuzungsabschnitt 28 in Verbindung mit dem Sperrelement 29 können die Wechselkontur 26 und die Nachstellkontur 27 auf gleicher Ebene in Bezug auf die Richtung der Drehachse 4 des Schneidkopfes 10 angeordnet sein, und dennoch verschieden voneinander ausgebildet sein.

Wie in den Figuren 17 und 18 gezeigt, wird das Stellelement 24 in Drehrichtung 17 relativ zum Gehäuse 11 gedreht. Die mindestens eine Klinke 21 sowie der mindestens eine Klinkenanschlag 25 sind derart ausgebildet, dass bei einer Relativdrehung des Stellelementes 24 gegenüber dem Gehäuse 11 in Drehrichtung 17 die mindestens eine Klinke 21 über den mindestens einen Klinkenanschlag 25 hinweggleitet. Das Stellelement 24 wird bei einer Relativdrehung des Stellelementes 24 gegenüber dem Gehäuse 11 in Drehrichtung 17 durch die Wirkverbindung des mindestens einen Klinkenanschlages 25 und der mindestens einen Klinke 21 nicht blockiert. Der mindestens eine Klinkenanschlag 25 und die mindestens eine Klinke 21 bilden bei Relativdrehung des Stellelementes 24 gegenüber dem Gehäuse 11 in Drehrichtung einen Freilauf.

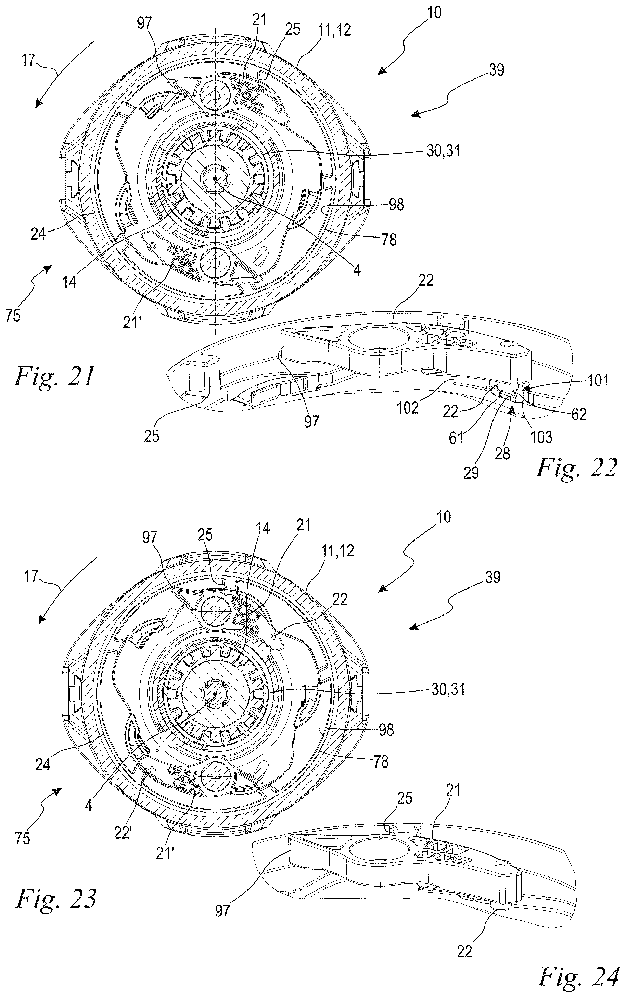

Die Spitze 97 der mindestens einen Klinke 21 gleitet über den Klinkenanschlag 25 hinweg. Dabei wird das Führungselement 22 zur Wickelkontur 26 hinbewegt. Das Stellelement 24 weist einen Kanal 101 zur Führung des Führungselementes 22 auf. Der Kanal 101 ist Teil der Wickelkontur 26. Wie in den Figuren 19 und 20 gezeigt, ist der Kanal 101 derart auf dem Stellelement 24 angeordnet, dass, bevor die Spitze 97 der mindestens einen Klinke 21 nicht mehr im Kontakt mit dem Klinkenanschlag 25 steht, das Führungselement 22 der mindestens einen Klinke 21 zumindest teilweise in dem Kanal 101 liegt. Das Führungselement 22 der mindestens einen Klinke 21 ist in dem Kanal 101 des Stellelementes 24 geführt. Der Kanal 101 erstreckt sich von einem Kanaleingang 102 bis zu einem Kanalausgang 103. Der Kanal 101 ist gekrümmt ausgebildet. Der Kanal 101 mündet über seinen Kanalausgang 103 im Kreuzungsabschnitt 28 der Wickelkontur 26 und der Nachstellkontur 27. Das Sperrelement 29 ist in dem Kanal 101 angeordnet. Das Sperrelement 29 ist in der vorliegenden Ausführung als eine in Richtung der Drehachse 4 des Schneidkopfes 10 federnde Zunge ausgebildet. Im Ausführungsbeispiel ist die Zunge einteilig mit dem Stellelement 24 ausgebildet. An dem Kanalausgang 103 des Kanals 101 weist das Sperrelement 29 eine Radialfläche 61 auf. Die Radialfläche 61 ist radial zur Drehachse 4 des Schneidkopfes 10 angeordnet. Die Radialfläche 61 ist Teil der Nachstellkontur 27. Die Radialfläche 61 des Sperrelementes 29 ist im Kreuzungsabschnitt 28 angeordnet. Ferner weist das Sperrelement 29 eine Axialfläche 62 auf. Die Axialfläche ist in etwa axial zur Drehachse 4 des Schneidkopfes 10 ausgerichtet. Die Axialfläche steigt ausgehend vom Kanaleingang 102 bis zum Kanalausgang 103 in Richtung zum Boden 70 des Gehäuseoberteils 12 an. Wie in den Figuren 21 und 22 gezeigt, muss das Sperrelement 29, insbesondere die Zunge, durch das Führungselement 22 nach unten in Richtung zum Gehäuseunterteil 13 gedrückt werden, damit das Führungselement 22 entlang der Wickelkontur 26 auf der Axialfläche 62 durch den Kanal 101 gleiten kann. Dabei wird auch die Radialfläche 61 des Sperrelementes 29 nach unten in Richtung Gehäuseunterteil 13 gedrückt, wodurch die Wickelkontur 26 freigegeben wird.

Wie in den Figuren 23 und 24 gezeigt, bewegt sich das Führungselement 22 entlang der Wickelkontur 26 aus dem Kanal 101 heraus. Dabei bewegt sich das Führungselement 22 der mindestens einen Klinke 21 durch den Kreuzungsabschnitt 28 hindurch und bewegt sich weiter entlang der Wickelkontur 26. Hat das Führungselement 22 den Kanal 101 verlassen, federt das Sperrelement 29 wieder in seine Ausgangslage zurück. Der Kanal 101 ist an seinem Kanalausgang 103 wieder durch die Radialfläche 61 des Sperrelementes 61 gesperrt.

Dreht sich das Stellelement 24 relativ zum Gehäuse 11 in die Gegenrichtung 18, bewegt sich das Führungselement 22 entlang der Nachstellkontur 27. Die Radialfläche 61 des Sperrelementes 29 ist dabei Teil der Nachstellkontur 27. Die Radialfläche 61 versperrt an dem Kreuzungsabschnitt 28 den Weg in den Kanal 101 entlang der Wickelkontur 26. Das Führungselement 22 gleitet über den Kanalausgang 103 hinweg an der Radialfläche 61 entlang, bis das Führungselement 22 auf einen Wandabschnitt 104 stößt. Der Wandabschnitt 104 weist eine zur Drehachse 4 des Schneidkopfes 10 ausgerichtete Innenseite 105 auf. Der Wandabschnitt 104 weist eine von der Drehachse 4 des Schneidkopfes 10 abgewandte Außenseite 106 auf (Fig. 18). Die Außenseite 106 des Wandabschnittes 104 ist Teil der Nachstellkontur 27. Die Innenseite 105 des Wandabschnittes 104 ist Teil der Wickelkontur 26, insbesondere Teil des Kanals 101.

## Patentansprüche

1. Schneidkopf,
umfassend ein Gehäuse (11), eine Wellenaufnahme (14) mit einem Aufnahmeraum (15) zur Befestigung des Schneidkopfes (10) an einer Abtriebswelle (3) eines Arbeitsgerätes (1), wobei der Schneidkopf (10) über die Abtriebswelle (3) um eine Drehachse (4) des Schneidkopfes (10) in eine Drehrichtung (17) antreibbar ist, eine im Gehäuse (11) angeordnete Fadenspule (16) zur Aufnahme mindestens eines Schneidfadens (19), eine Stelleinrichtung (20), wobei die Stelleinrichtung (20) zum Nachstellen einer freien Schneidfadenlänge (59) eines Schneidfadens (19) in Abhängigkeit der Fliehkraft ausgebildet ist, **dadurch gekennzeichnet, dass** der Schneidkopf (10) ein Griffelement (40) und eine Kupplungseinrichtung (30) umfasst, wobei das Griffelement (40) für den Bediener in einem montierten Zustand des Schneidkopfes (10) zugänglich ist, wobei die Kupplungseinrichtung (30) eine Betriebsstellung (38) und eine Wickelstellung (39) umfasst, wobei in der Betriebsstellung (38) der Kupplungseinrichtung (30) das Griffelement (40) und das Gehäuse (11) durch die Kupplungseinrichtung (30) bezüglich der Drehachse (4) des Schneidkopfes (11) drehfest miteinander verbunden sind, und wobei in der Wickelstellung (39) der Kupplungseinrichtung (30) zum Aufwickeln eines Schneidfadens (19)
- das Griffelement (40) und das Gehäuse (11) bezüglich der Drehachse (4) des Schneidkopfes (10) relativ zueinander drehbar sind und
- das Griffelement (40) und die Fadenspule (16) durch die Kupplungseinrichtung (30) drehfest verbunden sind.

2. Schneidkopf nach Anspruch 1,
**dadurch gekennzeichnet, dass** die Kupplungseinrichtung (30) ein Verbindungselement (31) zur drehfesten Verbindung des Gehäuses (11) und des Griffelementes (40) aufweist, und dass die Kupplungseinrichtung (30) eine Schalteinheit (35) umfasst, wobei das Verbindungselement (31) durch die Schalteinheit (35) in die Wickelstellung (39) und in die Betriebsstellung (38) schaltbar ist.

3. Schneidkopf nach Anspruch 2,
**dadurch gekennzeichnet, dass** die Schalteinheit (35) mindestens ein Schaltelement (36) aufweist, wobei das mindestens eine Schaltelement (36) in der Wickelstellung (39) der Kupplungseinrichtung (30) mit seinem einen Ende (46) in den Aufnahmeraum (15) der Wellenaufnahme (14) derart ragt, dass dieses beim Einführen einer Abtriebswelle (3) durch die Abtriebswelle (3) in die Betriebsstellung (38) der Kupplungseinrichtung (30) betätigbar ist.

4. Schneidkopf nach Anspruch 3,
**dadurch gekennzeichnet, dass** das mindestens eine Schaltelement (36) als ein Schwenkhebel ausgebildet ist, wobei der Schwenkhebel an der Wellenaufnahme (15) angeordnet und schwenkbar gelagert ist, wobei der Schwenkhebel über das eine Ende (46) im Aufnahmeraum (15) der Wellenaufnahme (14) betätigbar ist, und wobei ein anderes Ende (47) des Schwenkhebels auf das Verbindungselement (31) wirkt.

5. Schneidkopf nach Anspruch 1,
**dadurch gekennzeichnet, dass** das Verbindungselement (31) in der Betriebsstellung (38) der Kupplungseinrichtung (30) mit dem Gehäuse (11) formschlüssig, insbesondere mittels einer Stirnzahnverbindung, drehfest verbunden ist.

6. Schneidkopf nach Anspruch 1,
**dadurch gekennzeichnet, dass** die Stelleinrichtung (20) mindestens eine Klinke (21) umfasst, die in Richtung der Drehachse (4) feststehend zum Gehäuse (11) angeordnet ist, und dass die Stelleinrichtung (20) ein mit der Fadenspule (16) drehfest verbundenes Stellelement (24) mit mindestens einem Klinkenanschlag (25) umfasst, wobei die mindestens eine Klinke (21) derart ausgebildet ist, dass diese in Abhängigkeit der Fliehkraft dem Klinkenanschlag (25) ausweicht, wodurch sich die Fadenspule (16) relativ zum Gehäuse (11) dreht und Schneidfaden (19) nachführt.

7. Schneidkopf nach Anspruch 6,
**dadurch gekennzeichnet, dass** das Stellelement (24) eine Wickelkontur (26) und eine von der Wickelkontur (26) verschiedene Nachstellkontur (27) umfasst, wobei die mindestens eine Klinke (21) ein Führungselement (22) aufweist, das in Abhängigkeit der Drehrichtung des Stellelementes (24) relativ zum Gehäuse (11) entweder mit der Wickelkontur (26) oder der Nachstellkontur (27) wechselwirkt.

8. Schneidkopf nach Anspruch 7,
**dadurch gekennzeichnet, dass** das Stellelement (24) einen Kreuzungsabschnitt (28) aufweist, an dem sich die Wickelkontur (26) und die Nachstellkontur (27) kreuzen, wobei ein Sperrelement (29) drehrichtungsabhängig die Wickelkontur (26) oder die Nachstellkontur (27) am Kreuzungsabschnitt (28) freigibt.

9. Schneidkopf nach Anspruch 8,
**dadurch gekennzeichnet, dass** das Sperrelement (29) bezüglich der Drehachse (4) eine Radialfläche (61), die Teil der Nachstellkontur (27) ist, und eine Axialfläche (62), die Teil der Wickelkontur (26) ist, aufweist, wobei das Sperrelement (29) insbesondere als eine in Richtung der Drehachse (4) des Schneidkopfes (10) federnde Zunge ausgebildet ist.

10. Schneidkopf
umfassend ein Gehäuse (11), eine Wellenaufnahme (14) mit einem Aufnahmeraum (15) zur Befestigung des Schneidkopfes (10) an einer Abtriebswelle (3) eines Arbeitsgerätes (1), wobei der Schneidkopf (10) über die Abtriebswelle (3) um eine Drehachse (4) des Schneidkopfes (10) in eine Drehrichtung (17) antreibbar ist, eine im Gehäuse (11) angeordnete Fadenspule (16) zur Aufnahme mindestens eines Schneidfadens (19),
eine Stelleinrichtung (20), die derart ausgebildet ist, dass durch das Zulassen einer Relativdrehung zwischen Fadenspule (16) und Gehäuse (11) eine freie Schneidfadenlänge (59) eines Schneidfadens (19) in Abhängigkeit der Fliehkraft nachstellbar ist, wobei die Stelleinrichtung (20) mindestens zwei Klinken (21) umfasst, die fliehkraftbetätigt sind und in Richtung der Drehachse (4) des Schneidkopfes (10) feststehend zum Gehäuse (11) ausgebildet sind, und wobei der Schneidkopf (10) mindestens einen Klinkenanschlag (25) aufweist, der bezüglich der Drehachse (4) des Schneidkopfes (10) drehfest zur Fadenspule (16) ausgebildet, wobei das Gehäuse (11) in Drehrichtung (17) des Schneidkopfes (10) drehfest mit der Fadenspule (16) verbunden ist, wenn mindestens eine der mindestens zwei Klinken (21) an dem mindestens einen Klinkenanschlag (25) anliegt, wobei das Gehäuse (11) in Drehrichtung (17) des Schneidkopfes (10) relativ zur Fadenspule (16) drehbar ist, wenn keine der mindestens zwei Klinken (21) an dem mindestens einen Klinkenanschlag (25) anliegen,
**dadurch gekennzeichnet, dass** die Anzahl des mindestens einen Klinkenanschlages (25) ungleich dem Vielfachen der Anzahl der mindestens zwei Klinken (21) ist, und dass die mindestens zwei Klinken (21) und der mindestens eine Klinkenanschlag (25) derart zueinander angeordnet sind, dass die mindestens zwei Klinken (21) wechselseitig im Eingriff mit dem mindestens einen Klinkenanschlag (25) sind.

11. Schneidkopf nach Anspruch 10,
**dadurch gekennzeichnet, dass** die mindestens zwei Klinken (21) derart ausgebildet sind, dass diese in Abhängigkeit der Fliehkraft dem Klinkenanschlag (25) jeweils ausweichen, wodurch sich die Fadenspule (16) relativ zum Gehäuse (11) dreht und Schneidfaden (19) nachführt.

12. Schneidkopf nach Anspruch 11,
**dadurch gekennzeichnet, dass** das Stellelement (24) eine Wickelkontur (26) und eine von der Wickelkontur (26) verschiedene Nachstellkontur (27) umfasst, wobei die mindestens zwei Klinken (21) jeweils ein Führungselement (22) aufweisen, das in Abhängigkeit der Drehrichtung des Stellelementes (24) relativ zum Gehäuse (11) entweder mit der Wickelkontur (26) oder der Nachstellkontur (27) wechselwirkt.

13. Schneidkopf nach Anspruch 12,
**dadurch gekennzeichnet, dass** das Stellelement (24) einen Kreuzungsabschnitt (28) aufweist, an dem sich die Wickelkontur (26) und die Nachstellkontur (27) kreuzen, wobei ein Sperrelement (29) drehrichtungsabhängig die Wickelkontur (26) oder die Nachstellkontur (27) am Kreuzungsabschnitt (28) freigibt.

14. Schneidkopf nach Anspruch 13,
**dadurch gekennzeichnet, dass** das Sperrelement (29) bezüglich der Drehachse (4) eine Radialfläche (61), die Teil der Nachstellkontur (27) ist, und eine Axialfläche (62), die Teil der Wickelkontur (26) ist, aufweist, wobei das Sperrelement (29) insbesondere als eine in Richtung der Drehachse (4) des Schneidkopfes (10) federnde Zunge ausgebildet ist.
